# EUROPÄISCHE PATENTSCHRIFT

(11) **EP 4 618 169 B1**
(45) Veröffentlichungstag und Bekanntmachung des Hinweises auf die Patenterteilung: **23.09.2026**
(21) Anmeldenummer: 24163626.5
(22) Anmeldetag: 14.03.2024
(51) Int. Cl.: H01M 4/04, H01M 10/0585, H01M 50/121, H01M 50/172, H01M 50/191, H01M 50/533, H01M 50/536, H01M 50/586, H01M 50/59

(54) **BATTERIE MIT EINEM ELEKTRODENSTAPEL SOWIE VERFAHREN ZUR HERSTELLUNG EINER BATTERIE MIT EINEM ELEKTRODENSTAPEL**
BATTERY COMPRISING AN ELECTRODE STACK AND METHOD FOR PRODUCING A BATTERY COMPRISING AN ELECTRODE STACK
BATTERIE COMPRENANT UN EMPILEMENT D'ÉLECTRODES ET PROCÉDÉ DE FABRICATION D'UNE BATTERIE COMPRENANT UN EMPILEMENT D'ÉLECTRODES

(43) Veröffentlichungstag der Anmeldung: 17.09.2025
(73) Patentinhaber: Wyon Patent AG, 9050 Appenzell Steinegg (CH)
(72) Erfinder: Dörig, Mathias, 9050 Appenzell (CH); Bernholz, Uwe, 9058 Brülisau (CH)
(74) Vertreter: Keller Schneider Patent- und Markenanwälte AG

(56) Entgegenhaltungen:
- JP-B2- 5 562 654
- KR-B1- 101 690 367

## Beschreibung

### Technisches Gebiet

Die Erfindung betrifft eine Batterie sowie ein Verfahren zur Herstellung einer Batterie, insbesondere einer Sekundärbatterie, welche einen Elektrodenstapel umfasst.

### Stand der Technik

Eine Batterie ist ein elektrochemischer Energiespeicher und ein Energiewandler. Bei der Entladung wird gespeicherte chemische Energie in elektrische Energie umgewandelt. Diese kann von einem vom Stromnetz unabhängigen elektrischen Endgerät genutzt werden. Eine besondere Herausforderung an die Grösse, Sicherheit und Leistungsfähigkeit einer Batterie stellt die elektrische Versorgung medizinischer Geräte dar, die teilweise oder ganz implantiert werden, wie zum Beispiel Herzschrittmacher, Hörgeräte, Insulinpumpen und Medikamentendispenser. Auch für Unterhaltungsgeräte des täglichen Gebrauchs werden stets kleinere Batterien mit unverminderter Leistung und Laufzeit nachgefragt.

Primärbatterien können nur einmal entladen und nicht wieder aufgeladen werden. In diesen Batterien sind die elektrochemischen Reaktionen zwar teilweise umkehrbar, führen aber nicht mehr zur Wiederherstellung eines dem Neuzustand ähnlichen Energieinhalts.

Sekundärbatterien, auch Akkumulatoren genannt, können nach deren Entladung wieder in einen weitgehend einem Neuzustand entsprechenden Energieinhalt gebracht werden, so dass eine wiederholte Umwandlung von chemischer in elektrischer Energie und zurück möglich ist. Es sind unterschiedliche Arten von Sekundärbatterien bekannt. Wegen ihrer hohen Energiedichte werden Lithium-Ionen Batterien bei vielen Anwendungen bevorzugt.

Bei beiden Batterietypen besteht ein Problem darin, die durch die elektrochemischen Umwandlungsreaktionen erzeugte elektrische Energie aus der Batterie und bei Sekundärzellen umgekehrt auch wieder in die Batterie zu leiten, insbesondere wenn die Batterie ein Gehäuse aus einem Kunststoff aufweist, der nicht oder nur sehr schwach leitend ist.

Insbesondere Sekundärbatterien weisen üblicherweise einen Elektrodenstapel auf, in welchem eine Mehrzahl an Anoden- und Kathodenschichten angeordnet sind. Elektrischer Strom muss von jeder dieser Elektrodenschichten abgeleitet werden können, was üblicherweise mittels sog. Elektrodenfahnen aus einem leitenden Material geschieht. Diese Elektrodenfahnen müssen gebündelt bzw. deren Strom gesammelt und anschliessend aus der Batterie geleitet werden, insbesondere über I<ontaktelemente. Bei Sekundärbatterien wird zum Laden der Sekundärbatterie Strom über die I<ontaktelemente und den Elektrodenfahnen den jeweiligen Elektroden zugeführt. Es stellt sich regelmässig das Problem, wie die Elektrodenfahnen möglichst kompakt, kurzschluss- und beschädigungssicher zusammengeführt bzw. gebündelt und mit den I<ontaktelementen verbunden werden können.

Die EP 1 596 449 B1 (SAFT SA) beschreibt ein Befestigungssystem zwischen einem Elektrodenstapel sowie einem Ableiter einer Batterie. Die Befestigung zwischen Elektrodenfahnen sowie dem Ableiter wird mittels einer Schweissung bewerkstelligt. Die Elektrodenfahnen der Elektroden desselben Pols sind in einem definierten Abstand vom Stapel gebogen, so dass diese im Wesentlichen parallel zur Stapelrichtung des Elektrodenstapels liegen und selbst sequentiell übereinander gestapelt angeordnet sind. Der Ableiter ist mit dem Elektrodenfahnenstapel verschweisst. Die Elektrodenfahnen stehen um einen Abstand vom Elektrodenstapel ab, wobei die Biegung in einem zweiten Abstand vom Elektrodenstapel entfernt ist.

Die EP 3 709 392 B1 (Samsung SDI Co. Ltd.) beschreibt eine Sekundärbatterie mit einer Jellyroll-Elektrode oder einem Elektrodenstapel. Die Sekundärbatterie umfasst ein Elektrodenelement von welchem nicht beschichtete Elektrodenfahnen abstehen, einen Ableiter, der mit den Elektrodenfahnen verbunden ist und mit diesen auf eine Seite des Elektrodenelements gebogen ist, sowie einen Klebstreifen, der mit den Elektrodenfahnen und dem Ableiter verklebt ist. Die Sekundärbatterie umfasst ferner ein Gehäuse, in welchem das Elektrodenelement aufgenommen ist, sowie zwei Aussenkontakte, welche mit jeweils einem Pol des Elektrodenelements verbunden sind sowie einem Deckel, der das Gehäuse verschliesst. Die Sekundärbatterie kann eine Lithium-Ionen-Batterie sein. Die Elektrodenfahnen können L-förmig auf eine Seitenfläche umgebogen sein. Bei der Herstellung der Sekundärbatterie können die Elektrodenfahnen zunächst aufeinandergelegt und miteinander verschweisst werden, wobei in einem nächsten Schritt die Elektrodenfahnen mittels Laser gekürzt werden. Anschliessend werden die Elektrodenfahnenstapel jeweils mit einem Ableiter verschweisst und der Verbund schlussendlich auf eine Seitenfläche des Elektrodenelements umgebogen.

Die US 2022/0328940 A1 (Samsung SDI Co. Ltd.) offenbart eine Sekundärbatterie mit einem Elektrodenelement, einem Gehäuse sowie zwei Ableitern, die mit Elektrodenfahnen der Elektroden verschweisst sind, wobei die Elektrodenfahnen sowie die Ableiter mindestens einmal gebogen sind. Die Elektrodenfahnen werden vor dem Biegen vorzugsweise aufeinandergestapelt, wobei diese auch in mehrere Gruppen aufeinandergestapelt werden können. Das Elektrodenelement kann ein Elektrodenstapel sein. Auf dem Elektrodenfahnenstapel kann ein Klebstreifen aufgeklebt sein. Die Elektrodenfahnen können im Stapel mittels Laserschweissen untereinander befestigt sein. Der Elektrodenfahnenstapel kann nach dem Schweissen in der Länge zurechtgeschnitten werden.

Die JP 2018-092776 A (Toyota Industries Corp.) beschreibt ein Verfahren zum Herstellen einer Batterie. Beim Herstellungsverfahren werden in einem ersten Schritt Elektrodenfolien mit einer Elektrodenfahne geschnitten und mehrere Elektrodenfolien zu einem Stapel aufeinandergelegt. Fehlgeschnittene Elektrodenfolien werden vorgängig aussortiert und deren Elektrodenfahnen werden gekürzt. Diese fehlgeschnittenen Elektrodenfolien werden mit einer korrekt geschnittenen Elektrodenfolie kombiniert und die Elektrodenfahnen des Stapels werden anschliessend umgebogen. Mit diesem Verfahren können Lithium-Ionen Batterien hergestellt werden.

Als weitere relevante Druckschriften sind in diesem Zusammenhang KR 101 690 367 B1 (LG Chemical Ltd.) und JP 5 562654 (Hitachi Maxell) zu nennen.

### Darstellung der Erfindung

Aufgabe der Erfindung ist es, eine dem eingangs genannten technischen Gebiet zugehörende Batterie zu schaffen, welche möglichst kompakt ausgestaltet ist und einfach herzustellen ist.

Die Lösung der Aufgabe ist durch die Merkmale des Anspruchs 1 definiert. Gemäss der Erfindung umfasst die Batterie einen Elektrodenstapel mit einer Mehrzahl von ersten Elektroden, einer Mehrzahl von zweiten Elektroden sowie einer Mehrzahl von Separatoren, welche abwechselnd in einer Stapelrichtung aufeinandergelegt sind, so dass jeweils mindestens ein Separator zwischen mindestens einer der ersten Elektroden und mindestens einer der zweiten Elektroden angeordnet ist. Ferner umfasst die Batterie ein Gehäuse aus einem nicht leitenden Polymermaterial mit einem Hohlraum, in welchem der Elektrodenstapel angeordnet ist und welcher mit einer Elektrolytlösung befüllt ist. Die Batterie weist ferner mindestens eine erste Durchführung auf, welche an einer Wandung des Gehäuses angeordnet ist und eine erste elektrisch leitfähige Verbindung zwischen dem Hohlraum des Gehäuses sowie einer Aussenseite der Wandung bildet, wobei auf der Aussenseite der Wandung die mindestens eine erste Durchführung ein erstes elektrisch leitfähiges I<ontaktelement aufweist. Die Mehrzahl der ersten Elektroden verfügen jeweils über eine Elektrodenfahne, welche von den jeweiligen ersten Elektroden abstehen. Die Mehrzahl an ersten Elektroden sind derart im Elektrodenstapel angeordnet, dass deren Elektrodenfahnen in Stapelrichtung gesehen übereinander liegen. Alle Elektrodenfahnen der ersten Elektroden sind im Bereich einer Aussenkante der jeweiligen ersten Elektroden in Stapelrichtung in eine erste Richtung in einem ersten Winkel umgebogen, so dass die Elektrodenfahnen der ersten Elektroden auf einer ersten Seite des Elektrodenstapels an diesem Anliegen und aufeinander aufliegen. Alle Separatoren verfügen zumindest in einem Bereich, der in Stapelrichtung oberhalb bzw. unterhalb der Elektrodenfahnen der ersten Elektroden liegt, über eine hervorstehende erste Lasche, welche in die erste Richtung umgebogen ist, so dass jeweils mindestens eine erste Lasche zwischen einer umgebogenen Elektrodenfahne der ersten Elektroden und mindestens einer der zweiten Elektroden liegt. Mindestens eine der Elektrodenfahnen der ersten Elektroden ist elektrisch mit der ersten Durchführung verbunden.

Durch diese Ausgestaltung der Batterie, insbesondere des Elektrodenstapels, ist die Batterie relativ kompakt ausgestaltet und lässt sich einfach herstellen. Die umgebogenen Elektrodenfahnen der ersten Elektroden bilden hierbei einen auf einer Seite des Elektrodenstapels aufliegender Elektrodenfahnenstapel, welcher als elektrische Leitung zwischen den Elektroden und der ersten Durchführung dient. Durch die Anordnung mindestens einer ersten Lasche eines Separators zwischen jeder der umgebogenen Elektrodenfahnen der ersten Elektroden sowie mindestens einer zweiten Elektrode werden die umgebogenen Elektrodenfahnen der ersten Elektroden elektrisch von den zweiten Elektroden isoliert, wodurch allfällige Kurzschlüsse zwischen den Elektrodenfahnen der ersten Elektroden sowie den zweiten Elektroden zuverlässig verhindert werden können.

Die Batterie ist vorzugsweise eine Sekundärbatterie. Alternativ kann die Batterie jedoch auch eine Primärbatterie sein. Vorzugsweise ist die Batterie eine Lithium-Ionen Batterie.

Unter Mehrzahl wird in der folgenden Anmeldung eine Anzahl grösser als eins verstanden. Der Elektrodenstapel der erfindungsgemässen Batterie umfasst daher mindestens zwei erste Elektroden, mindestens zwei zweite Elektroden sowie mindestens zwei Separatoren.

Der Elektrodenstapel verfügt über eine schichtförmige Anordnung von ersten und zweiten Elektroden, wobei jeweils zwischen einer ersten Elektrode und einer zu dieser benachbarten zweiten Elektrode mindestens ein Separator angeordnet ist. Jede Elektrode weist aktives Material auf bzw. ist mit einem aktivem Material beschichtet. Die Elektroden liegen vorzugsweise in der Form von Folien aus leitendem Material vor, auf welche das aktive Material aufgebracht oder welche mit dem aktiven Material beschichtet sind. An den negativen Elektroden ist Anodenmaterial angebracht und an den positiven Elektroden ist I<athodenmaterial angebracht. Dabei können die Elektroden einseitig oder beidseitig mit aktivem Material beschichtet sein.

Das Aktivmaterial der ersten Elektroden ist vorzugsweise ein Kathodenmaterial, während das Aktivmaterial der zweiten Elektroden vorzugsweise ein Anodenmaterial ist. Alternativ kann das aktive Material der ersten Elektroden jedoch auch ein Anodenmaterial sein und das Aktivmaterial der zweiten Elektroden ein Kathodenmaterial.

Sofern die Batterie eine Lithium-Ionen Batterie ist, umfasst das Kathodenmaterial vorzugsweise Lithium-Nickel-Mangan-Kobalt-Oxid (NMC), Lithium-Nickel-Kobalt-Aluminium-Oxid (NCA), Lithium-Nickel-Kobalt-Mangan-Aluminium-Oxid (NCMA), Lithium-Mangan-Oxid (LMO), Lithium-Eisen-Phosphat (LFP) oder Lithium-Kobalt-Oxid (LCO). Das Anodenmaterial umfasst in diesem Fall vorzugsweise Graphit, Lithiumtitanat (LTO), Hartkohle, Zinn-Kobalt-Legierung oder Silizium-Kohle.

In einer Ausführungsform können auch mehrere erste Elektroden bzw. mehrere zweite Elektroden direkt aufeinander gelegt sein, wobei dadurch eine Elektrodenschicht erster Elektroden bzw. zweiter Elektroden gebildet wird. In diesem Fall ist zwischen einer Schicht an ersten Elektroden und einer benachbarten Schicht an zweiten Elektroden mindestens ein Separator angeordnet.

Die Schichten einer Elektrodenart bzw. auch jede einzelne erste und/oder zweite Elektrode können bei einer weiteren Ausführungsform zwischen zwei zu diesen benachbarten Separatoren eingeschweisst sein, d.h. die beiden Separatoren bilden eine taschenförmige Aufnahme, in welcher eine Schicht an Elektroden oder eine einzelne Elektrode aufgenommen ist. In diesem Fall sind die Separatoren nicht über ihren gesamten Umfang miteinander verschweisst, sondern weisen mindestens einen nicht-verschweissten Randbereich auf, durch welchen mindestens eine Elektrodenfahne herausragen kann.

Der Elektrodenstapel weist vorzugsweise eine polyedrische Form auf. Ferner kann der Elektrodenstapel jedoch auch in der Form eines Zylinders oder in einer beliebig anderen Form, beispielsweise eine Hufeisens vorliegen. Die Form und Grösse des Elektrodenstapels ist dabei auf die Form und Grösse des Hohlraumes bzw. des Gehäuses angepasst. Dementsprechend weisen auch die ersten sowie die zweiten Elektroden eine polygonale, runde oder andere Form auf. Die ersten und die zweiten Elektroden weisen hierbei insbesondere bevorzugt dieselbe Form sowie dieselben Dimensionen auf. Alternativ können jedoch auch die ersten Elektroden grössere oder kleinere Dimensionen aufweisen als die zweiten Elektroden. Die ersten und zweiten Elektroden weisen hierbei je eine umlaufende Aussenkante auf.

Alle erste Elektroden weisen vorzugsweise dieselbe Form sowie dieselbe Dimension auf. Alternativ können die ersten Elektroden jedoch auch über unterschiedliche Dimensionen aufweisen, so dass beispielsweise in Stapelrichtung die Dimensionen der ersten Elektroden abnehmen. Auch alle zweiten Elektroden weisen vorzugsweise dieselbe Form und dieselben Dimensionen auf. Alternativ können die zweiten Elektroden jedoch auch über unterschiedliche Dimensionen aufweisen, so dass beispielsweise in Stapelrichtung die Dimensionen der zweiten Elektroden abnehmen. Ferner weisen vorzugsweise alle Separatoren dieselbe Form und dieselben Dimensionen auf. Alternativ können die zweiten Elektroden jedoch auch über unterschiedliche Dimensionen aufweisen, so dass beispielsweise in Stapelrichtung die Dimensionen der zweiten Elektroden abnehmen. Vorzugsweise werden bei der Verwendung von ersten Elektroden, zweiten Elektroden sowie Separatoren, welche jeweils untereinander über unterschiedlich Dimensionen verfügen, diese derart aufeinander gestapelt, dass der Elektrodenstapel eine definierte geometrische Form erhält, beispielsweise in der Form eines Pyramidenstumpfes oder eines Kegelstumpfes.

Gehäuse aus einem nicht leitenden Polymermaterial können einfach, kostengünstig und mit kundenspezifischen Abmessungen, beispielsweise mittels Spritzguss, hergestellt werden. Das nicht leitende Polymermaterial ist vorzugsweise elektrolytbeständig und/oder korrosionsbeständig. Bei einem Gehäuse aus einem nicht leitenden Polymermaterial ist kein Sicherheitsabstand zwischen einer Innenwandung des Gehäuses und dem Elektrodenstapel nötig, das heisst, dass der Elektrodenstapel die Innenwandung des Gehäuses berühren kann, so dass für den Elektrodenstapel bei gleichen Abmessungen des Gehäuses bzw. des Hohlraumes eine grössere Fläche zur Verfügung steht als bei einer Batterie mit einem Gehäuse aus einem leitenden Material. Ebenso kann mit einer genauen Einpassung der Batterie in ein Gerät, was mit einem Gehäuse aus Polymermaterial besonders einfach ist, nochmals zusätzlicher Energieinhalt gewonnen werden. Bei einem Gehäuse aus Polymermaterial ist die Formgebung kaum eingeschränkt.

Vorteilhafterweise wird für das Gehäuse LCP (flüssigkristalline Elastomere) oder Polyethylen (PE) eingesetzt. Vorzugsweise besteht das Gehäuse aus oder enthält mit I<ohlenstofffasern oder Glasfasern verstärktes LCP.

Das Gehäuse weist vorzugsweise eine Wandstärke von weniger als 1 mm, im Besonderen von weniger als 0.5 mm, und im ganz besonderen von 0.3 mm oder weniger auf. Die Wandstärke spielt bei kleinen Batterien eine wesentliche Rolle, da bei vorgegebenen Aussenabmessungen der Batterie eine Verringerung der Wandstärke dazu genutzt werden kann, ein grösserer Elektrodenstapel in das Gehäuse einzubringen und damit die Kapazität der Batterie zu erhöhen.

Das Gehäuse ist vorzugsweise gasdicht, elektrolytbeständig und/oder korrosionsbeständig. Gasdichte Gehäuse ermöglichen eine lange Lebensdauer der Batterie, weil ein Ausgasen nicht möglich ist und auch keine unerwünschten Stoffe in den Hohlraum des Gehäuses hineindiffundieren können.

Vorzugsweise besteht das Gehäuse aus zwei Teilen, die bei der Herstellung gasdicht miteinander verbunden werden, z.B. durch Schweissen. Insbesondere kann das Gehäuse aus einem Gehäusebecher und einem Gehäusedeckel bestehen. Dies vereinfacht die Herstellung der Batterie, da der Elektrodenstapel oder auch die Elektroden sowie Separatoren sequentiell in den offenen Gehäusebecher eingelegt, und der Gehäusebecher anschliessend mit der Elektrolytlösung befüllt werden kann. Die Befüllung mit der Elektrolytlösung kann entweder vor dem Verschliessen des Gehäusebechers mit dem Gehäusedeckel erfolgen oder alternativ auch nach dem Verschliessen des Gehäusebechers mit dem Gehäusedeckel, wobei in letzterem Fall die Elektrolytlösung über eine entsprechende Einfüllöffnung im Gehäusebecher oder dem Gehäusedeckel in den Gehäusebecher gefüllt werden kann.

Vorzugsweise ist die erfindungsgemässe Batterie eine Kleinbatterie bzw. ein Kleinakkumulator mit einem Volumen von weniger als 30 cm³, insbesondere mit einem Volumen kleiner als 10 cm³, und im ganz besonderen mit einem Volumen von kleiner als 1 cm³. Kleinbatterien bzw. Kleinakkumulatoren können Knopfzellen sein. Knopfzellen können eine runde Form haben, wobei ihr Durchmesser vorzugsweise grösser ist als ihre Höhe. Alternativ kann aber eine Kleinbatterie bzw. ein Kleinakkumulator auch quaderförmig sein oder eine beliebige, gerätespezifische Form haben, wie beispielsweise eine Hufeisenform oder eine Tropfenform. Unter einer gerätespezifischen Form ist eine Form zu verstehen, die dem für eine Batterie verfügbaren Raum in dem Gerät entspricht oder den gerätespezifischen Raum besser ausnutzt, in welchem die Batterie eingesetzt werden soll.

Kleinbatterien bzw. Kleinakkumulatoren können eine Bauhöhe vom 6 mm oder weniger aufweisen, insbesondere von 5 mm oder weniger. Diese verfügen bevorzugt über einen einzigen Elektrodenstapel und weisen eine Nennspannung im Bereich von 1 V bis 6 V auf, insbesondere von 2 V bis 4.5 V, und im ganz besonderen von 3 V bis 4.2 V.

Im Hohlraum des Gehäuses ist eine Elektrolytlösung eingefüllt. Als Elektrolytlösung wird eine für den Typ der Batterie geeignete Lösung eingesetzt. Sofern die Batterie eine Lithium-Ionen Batterie bzw. Akkumulator ist, wird vorzugsweise eine nichtwässrige Elektrolytlösung, z.B. eine Salzlösung, welche vorzugsweise ein Lithiumsalz umfasst, oder eine Polymerlösung eingesetzt.

Die mindestens eine erste Durchführung ragt vorzugsweise durch eine Öffnung in der entsprechenden Wandung des Gehäuses. Vorzugsweise weist die Durchführung hierzu über ein Element aus einem elektrisch leitenden Material auf, insbesondere aus einem Metall, der durch die Öffnung durchgeführt ist. Vorzugsweise wird die Durchführung jedoch durch ein metallisches Element gebildet, welches in die Wandung des Gehäuses warmeingepresst wird. Das elektrisch leitende I<ontaktelement dient vorzugsweise als elektrischen Kontakt der Batterie und bildet somit einen Pol der Batterie.

Die Elektrodenfahnen der Mehrzahl der ersten Elektroden weisen vorzugsweise eine rechteckig Form auf. Die Elektrodenfahnen sind vorzugsweise einstückig mit den ersten Elektroden ausgebildet, das heisst, dass jede Elektrode mit ihrer Elektrodenfahne als zusammenhängendes Teil ausgeführt ist. Alternativ können die Elektrodenfahnen jedoch auch als separate Teile vorliegen, welche mit den Elektroden elektrisch und vorzugsweise stoffschlüssig verbunden sind. Hierbei können die Elektrodenfahnen als leitendes Gitter, leitendes Trägerband und/oder als leitende Folie ausgebildet sein, welche jeweils mit einer ersten Elektrode verbunden und vorzugsweise frei von aktivem Material sind.

Die Elektrodenfahnen weisen vorzugsweise kein Aktivmaterial auf. Die Elektrodenfahnen der ersten Elektroden stehen von den Elektroden ab, das heisst, dass diese von der umlaufenden Aussenkante der ersten Elektroden abstehen. Vorzugsweise sind die Elektrodenfahnen derart konfiguriert, dass eine ihrer kürzeren Seiten mit der Aussenkante der jeweiligen Elektrode zusammenfällt.

Die ersten Elektroden sind derart im Elektrodenstapel angeordnet, dass deren Elektrodenfahnen alle in Stapelrichtung übereinander liegen. Das heisst, dass alle Elektrodenfahnen der ersten Elektroden in Stapelrichtung gesehen alle im Wesentlichen in einer Linie angeordnet sind.

Alle Elektrodenfahnen der ersten Elektroden sind im Bereich der Aussenkante der jeweiligen ersten Elektrode in eine erste Richtung in einem ersten Winkel umgebogen. Vorzugsweise ist der erste Winkel ein rechter Winkel. Das heisst, dass die Elektrodenfahne einer jeder ersten Elektrode in eine Richtung umgebogen ist, die parallel zu einer Normalen der jeweiligen ersten Elektrode und somit auch parallel zur Stapelrichtung ist. Die Elektrodenfahnen sind vorzugsweise derart umgebogen, dass im Bereich der Biegung kein Knick vorliegt, sondern die Biegung einen insbesondere konstanten Radius aufweist. Der erste Winkel beträgt vorzugsweise zwischen 60° - 120 °, insbesondere bevorzugt 90° ± 3°.

Alle Elektrodenfahnen der ersten Elektroden sind in dieselbe erste Richtung umgebogen,. Da die Elektrodenfahnen der ersten Elektroden hierbei alle übereinander liegen, führt das Umbiegen dazu, dass alle Elektrodenfahnen nach dem Umbiegen in dieselbe Richtung weisen und aufeinanderliegen, wodurch ein Elektrodenfahnenstapel gebildet wird. Durch dieses Aufeinanderliegen stehen die Elektrodenfahnen der ersten Elektroden in physischem sowie elektrischen Kontakt miteinander. Ferner liegen die Elektrodenfahnen der ersten Elektroden an eine Seite des Elektrodenstapels auf.

Alle Separatoren weisen eine erste Lasche auf, welche vom jeweiligen Separator absteht. Die Separatoren sind derart im Elektrodenstapel angeordnet, dass die erste Lasche eines jeden Separators in einem Bereich liegt, der ober- oder unterhalb der Elektrodenfahne benachbarter ersten Elektroden liegt. Die ersten Laschen der Separatoren sind in dieselbe erste Richtung umgebogen wie die Elektrodenfahnen der ersten Elektroden. Dies führt dazu, dass mindestens eine erste Lasche zwischen einer umgebogenen Elektrodenfahne der ersten Elektroden und mindestens einer zweiten Elektrode liegt. Dadurch wird eine zuverlässige und platzsparende elektrische Isolation zwischen den umgebogenen Elektrodenfahnen der ersten Elektrode sowie den zweiten Elektroden erzielt.

Die mindestens eine erste Durchführung kann direkt elektrisch mit mindestens einer der Elektrodenfahnen der ersten Elektroden verbunden sein. Vorzugsweise ist die mindestens eine erste Durchführung jedoch mittels eines ersten Ableiters mit mindestens einer Elektrodenfahne der ersten Elektroden verbunden. Dadurch bildet die mindestens eine erste Durchführung einen ersten Pol der Batterie.

Vorzugsweise verfügt die Mehrzahl der zweiten Elektroden jeweils über eine Elektrodenfahne, welche von den jeweiligen zweiten Elektroden abstehen, wobei die Mehrzahl an zweiten Elektroden derart im Elektrodenstapel angeordnet sind, dass deren Elektrodenfahnen in Stapelrichtung gesehen übereinander liegen. Alle Elektrodenfahnen der zweiten Elektroden sind vorzugsweise im Bereich einer Aussenkante der jeweiligen zweiten Elektroden in Stapelrichtung in eine zweite Richtung in einem zweiten Winkel umgebogen, so dass die Elektrodenfahnen der zweiten Elektroden auf einer zweiten Seite des Elektrodenstapels an diesem Anliegen und aufeinander aufliegen, wobei alle Separatoren zumindest in einem Bereich, der in Stapelrichtung oberhalb bzw. unterhalb der Elektrodenfahnen der zweiten Elektroden liegt, über eine hervorstehende zweite Lasche verfügen, welche in die zweite Richtung umgebogen sind, so dass jeweils eine der zweiten Laschen zwischen einer Elektrodenfahne der zweiten Elektroden und mindestens einer der ersten Elektroden liegt. Vorzugsweise ist mindestens eine der Elektrodenfahnen der zweiten Elektroden elektrisch mit einer zweiten Durchführung verbunden, welche an einer Wandung des Gehäuses angeordnet ist und eine zweite elektrisch leitfähige Verbindung zwischen dem Hohlraum des Gehäuses sowie einer Aussenseite der Wandung bildet, wobei auf der Aussenseite der Wandung die mindestens eine zweite Durchführung ein zweites elektrisch leitfähiges I<ontaktelement aufweist.

Durch diese Konfiguration der erfindungsgemässen Batterie bilden die Elektrodenfahnen der zweiten Elektroden einen Elektrodenfahnenstapel auf einer zweiten Seite des Elektrodenstapels, wobei dieser Elektrodenfahnenstapel elektrisch mit der zweiten Durchführung verbunden ist. Die zweite Durchführung bildet hierbei den zweiten Pol der Batterie.

Die erste Richtung sowie die zweite Richtung können unterschiedlich sein, sind jedoch bevorzugt gleich. Das heisst, dass bevorzugt die Elektrodenfahnen der ersten Elektroden sowie der zweiten Elektroden und die ersten und zweiten Laschen der Separatoren in dieselbe Richtung umgebogen sind.

Der erste Winkel und der zweite Winkel können unterschiedlich sein, sind jedoch bevorzugt gleich.

Vorzugsweise verfügt die erste Durchführung und allenfalls die zweite Durchführung jeweils über einen ersten Ableiter bzw. über einen zweiten Ableiter in der Form eines Metallstreifens, der sich in Stapelrichtung entlang einer Innenwandung des Gehäuses erstreckt, wobei der Elektrodenstapel derart im Hohlraum angeordnet ist, dass mindestens eine der Elektrodenfahnen der ersten Elektroden mit dem ersten Ableiter der ersten Durchführung in Kontakt ist sowie allenfalls mindestens eine der Elektrodenfahnen der zweiten Elektroden mit dem zweiten Ableiter der zweiten Durchführung in Kontakt ist.

Durch die Ausgestaltung des ersten bzw. zweiten Ableiters in der Form eines Metallstreifens, der sich in Stapelrichtung entlang der Innenwandung des Gehäuses erstreckt, kann eine Kontaktierung der aufeinanderliegenden Elektrodenfahnen der ersten bzw. zweiten Elektroden mit dem jeweiligen Ableiter möglichst über die gesamte Ausdehnung des Elektrodenstapels in Stapelrichtung erzielt werden, wodurch sich eine besonders gute elektrische Kontaktierung zwischen den Elektrodenfahnen und dem jeweiligen Ableiter ergibt.

Vorzugsweise ist der Ableiter der ersten Durchführung mit der mindestens einen Elektrodenfahne der ersten Elektroden und allenfalls der Ableiter der zweiten Durchführung mit der mindestens einen Elektrodenfahne der zweiten Elektroden stoffschlüssig verbunden, insbesondere durch Schweissen.

Dadurch kann eine zuverlässige und betriebssichere Verbindung zwischen dem ersten bzw. zweiten Ableiter sowie der entsprechenden mindestens einen Elektrodenfahne gebildet werden. Vorzugsweise sind auch die Elektrodenfahnen der ersten Elektroden sowie allenfalls die Elektrodenfahnen der zweiten Elektroden stoffschlüssig miteinander verbunden.

Vorzugsweise weisen die Elektrodenfahnen der ersten Elektroden in einem ersten Bereich, der an eine Aussenkante einer jeweiligen ersten Elektrode anliegt, eine geringere Breite auf, als in einem zweiten Bereich, der sich vom ersten Bereich bis zu einem freien Ende der Elektrodenfahnen erstreckt.

Dadurch weisen die Elektrodenfahnen der ersten Elektroden im Bereich, in welchem diese in die erste Richtung umgebogen werden, eine geringere Breite auf. Dadurch wird erzielt, dass die Elektrodenfahnen im Bereich, in denen diese aufeinandergestapelt werden, über eine grössere Oberfläche verfügen, womit Abweichungen, die beim Übereinanderstapeln der Elektroden entstehen können, ausgeglichen werden können. Das heisst, dass selbst wenn nicht alle Elektrodenfahnen perfekt in Stapelrichtung übereinander angeordnet sind, nach dem Umbiegen derselben gewährleistet ist, dass diese in genügendem Masse aufeinanderliegen, so dass ein zuverlässiger elektrischer Kontakt zwischen den umgebogenen Elektrodenfahnen besteht.

Als freies Ende der Elektrodenfahnen wird dasjenige Ende verstanden, welches nicht mit einer Elektrode verbunden ist.

Sofern die zweiten Elektroden ebenfalls über umgebogene Elektrodenfahnen verfügen, weisen diese vorzugsweise ebenfalls in einem dritten Bereich, der an eine Aussenkante einer jeweiligen zweiten Elektrode anliegt, eine geringere Breite auf, als in einem vierten Bereich, der sich vom dritten Bereich bis zu einem freien Ende der Elektrodenfahnen der zweiten Elektroden erstreckt.

Vorzugsweise verfügen die Aussenkanten aller ersten Elektroden im Bereich der Elektrodenfahnen über eine erste Einkerbung, aus welcher die Elektrodenfahnen der ersten Elektroden abstehen, wobei die zweiten Elektroden sowie die Separatoren an ihren Aussenkanten jeweils über eine zweite Einkerbung bzw. über eine dritte Einkerbung verfügen und derart im Elektrodenstapel angeordnet sind, dass die zweiten Einkerbungen der zweiten Elektroden sowie die dritten Einkerbungen der Separatoren kongruent zu den ersten Einkerbungen der ersten Elektroden sind.

Unter Einkerbung wird ein Bereich der Aussenkante verstanden, der gegenüber dem Rest der Aussenkante zurückversetzt ist, d.h. weiter zum Zentrum der jeweiligen Elektrode bzw. des jeweiligen Separators hin liegt, als der Rest der entsprechenden Aussenkante.

Durch das Vorsehen der ersten Einkerbungen der ersten Elektroden, der zweiten Einkerbungen der zweiten Elektroden sowie der dritten Einkerbungen der Separatoren wird ein erster Kanal gebildet, der gegenüber der Aussenkanten der ersten Elektroden, der zweiten Elektroden sowie der Separatoren zurückversetzt ist und in welchen die umgebogenen und aufeinandergelegten Elektrodenfahnen der ersten Elektroden aufgenommen sind. Dadurch kann, mit Ausnahme des Bereichs der Einkerbungen, der gesamte Querschnitt des Hohlraumes des Gehäuses für den Elektrodenstapel verwendet werden, wodurch eine höhere Energiespeicherdichte des Elektrodenstapels erzielt wird.

Die ersten, zweiten und dritten Einkerbungen weisen entlang der Aussenkanten der ersten Elektroden, der zweiten Elektroden und der Separatoren vorzugsweise eine grössere Ausdehnung auf, als die Breite der Elektrodenfahnen der ersten Elektroden.

Vorzugsweise weisen die ersten Einkerbungen, die zweiten Einkerbungen sowie die dritten Einkerbungen dieselbe Form sowie dieselben Dimensionen auf. Alternativ können die zweiten Einkerbungen und/oder die dritten Einkerbungen eine von den ersten Einkerbungen abweichende Form und/oder grössere oder kleinere Dimensionen aufweisen. Weiter bevorzugt weisen die Einkerbungen keine Ecken auf, sondern die Übergänge von den Aussenkanten der Elektroden sowie der Separatoren zu den Einkerbungen sowie die Übergänge zwischen Kanten der Einkerbungen sind gerundet ausgeführt, insbesondere durch Rundungen mit konstanten Radien.

Die vorliegende Anmeldung bezieht sich ferner auf ein Verfahren zur Herstellung einer Batterie, insbesondere eine Batterie gemäss oben stehender Beschreibung. Erfindungsgemäss werden in einem ersten Schritt des Verfahrens eine Mehrzahl an ersten Elektroden, eine Mehrzahl an zweiten Elektroden sowie eine Mehrzahl an Separatoren bereitgestellt. Jede der ersten Elektroden verfügt über eine von dieser abstehenden Elektrodenfahne und jeder der Separatoren verfügt über eine von diesem abstehende erste Lasche. In einem zweiten Schritt wird ein Elektrodenstapel gebildet, indem die Mehrzahl an ersten Elektroden, die Mehrzahl an zweiten Elektroden sowie die Mehrzahl an Separatoren abwechselnd in einer Stapelrichtung aufeinandergelegt werden, so dass jeweils mindestens ein Separator zwischen mindestens einer der ersten Elektroden und mindestens einer der zweiten Elektroden angeordnet ist. Die ersten Elektroden sowie die Separatoren werden dabei derart im Elektrodenstapel angeordnet, dass die Elektrodenfahnen der ersten Elektroden sowie die ersten Laschen der Separatoren in Stapelrichtung gesehen übereinander liegen. Anschliessend werden die Elektrodenfahnen der ersten Elektroden sowie die ersten Laschen der Separatoren in Stapelrichtung in eine erste Richtung in einem ersten Winkel umgebogen, so dass die Elektrodenfahnen der ersten Elektroden auf einer ersten Seite des Elektrodenstapels an diesem Anliegen und aufeinander aufliegen, wobei jeweils eine der ersten Laschen zwischen einer umgebogenen Elektrodenfahne der ersten Elektroden und mindestens einer der zweiten Elektroden liegt. In einem nächsten Schritt wird der Elektrodenstapel in einen Hohlraum eines Gehäuses aus einem nicht leitenden Polymermaterial eingelegt, welches an einer Wandung über mindestens eine erste Durchführung verfügt. Die mindestens eine erste Durchführung bildet eine erste elektrisch leitfähige Verbindung zwischen dem Hohlraum des Gehäuses sowie einer Aussenseite der Wandung, wobei auf der Aussenseite der Wandung die mindestens eine erste Durchführung ein erstes elektrisch leitfähiges I<ontaktelement aufweist. Anschliessend wird die erste Durchführung mit mindestens einer Elektrodenfahne der ersten Elektroden elektrisch in Kontakt gebracht. Schlussendlich wird das Gehäuse verschlossen sowie der Hohlraum mit einer Elektrolytlösung befüllt.

Die zweiten Elektroden können ebenfalls über Elektrodenfahnen verfügen, welche in gleicher Weise wie die Elektrodenfahnen der ersten Elektroden in Stapelrichtung in eine zweite Richtung in einem zweiten Winkel umgebogen werden, wobei in diesem Fall alle Separatoren über jeweils eine zweite Lasche verfügen und ebenfalls in die zweite Richtung umgebogen werden. Die Separatoren werden hierbei derart im Elektrodenstapel angeordnet, dass deren erste Laschen in einer Linie mit den Elektrodenfahnen der ersten Elektroden und deren zweite Laschen in einer Linie mit den Elektrodenfahnen der zweiten Elektroden liegen. In diesem Fall verfügt das Gehäuse vorzugsweise über eine zweite Durchführung, welche eine zweite elektrisch leitfähige Verbindung zwischen dem Hohlraum des Gehäuses sowie einer Aussenseite der Wandung bildet, wobei auf der Aussenseite der Wandung die mindestens eine zweite Durchführung ein zweites elektrisch leitfähiges I<ontaktelement aufweist. Anschliessend wird die zweite Durchführung mit mindestens einer Elektrodenfahne der zweiten Elektroden elektrisch in Kontakt gebracht

Die erste Richtung sowie die zweite Richtung sind vorzugsweise gleich, das heisst, dass sowohl die Elektrodenfahnen der ersten Elektroden wie auch die Elektrodenfahnen der zweiten Elektroden sowie die ersten Laschen und die zweiten Laschen der Separatoren in dieselbe Richtung umgebogen sind. Alternativ kann die zweite Richtung jedoch auch in Stapelrichtung gesehen der ersten Richtung entgegengesetzt sein.

Der erste Winkel sowie der zweite Winkel sind vorzugsweise gleich, können jedoch bei gewissen Ausführungsformen auch voneinander unterschiedlich sein.

Die Elektrolytlösung kann vor dem Verschliessen des Gehäuses in dieses eingefüllt werden oder alternativ auch nach dessen Verschliessen. Im letzteren Fall wird die Elektrolytlösung vorzugsweise über eine Einfüllöffnung des Gehäuses in dieses gefüllt.

Vorzugsweise wird vor dem Anordnen des Elektrodenstapels in den Hohlraum des Gehäuses ein erster Ableiter in der Form eines metallischen Streifens auf einer Innenwandung des Gehäuses angeordnet, wobei sich der metallische Streifen auf der Innenwandung in einer Richtung, die der Stapelrichtung des Elektrodenstapels, der später in den Hohlraum des Gehäuses angeordnet wird, entspricht, erstreckt und der erste Ableiter mit der ersten Durchführung elektrisch verbunden wird. Anschliessend wird der Elektrodenstapel derart in den Hohlraum angeordnet, dass mindestens eine Elektrodenfahne der ersten Elektroden mit dem ersten Ableiter in Kontakt kommt, wobei der erste Ableiter vorzugsweise anschliessend stoffschlüssig mit der mindestens einen Elektrodenfahne der ersten Elektroden verbunden wird.

Die stoffschlüssige Verbindung der mindestens einen Elektrodenfahne der ersten Elektroden wie auch der mindestens einen ersten Durchführung mit dem ersten Ableiter erfolgt vorzugsweise durch Schweissen. Die stoffschlüssige Verbindung zwischen dem ersten Ableiter sowie der mindestens einen Elektrodenfahne der ersten Elektroden erfolgt vorzugsweise über die gesamte Länge, in welcher der erste Ableiter mit der mindestens einen Elektrodenfahne der ersten Elektrode in Kontakt ist.

Sofern die zweiten Elektroden ebenfalls über Elektrodenfahnen verfügen, so wird vorzugsweise ein zweiter Ableiter in der Form eines metallischen Streifens auf einer Innenwandung des Gehäuses angeordnet, welcher sich ebenfalls in der Stapelrichtung erstreckt und mit der zweiten Durchführung elektrisch verbunden wird.

Der erste Ableiter sowie allenfalls der zweite Ableiter können an der entsprechenden Innenwandung fixiert werden, beispielsweise durch Kleben oder ähnlich. Alternativ kann das Gehäuse auf mindestens einer Innenseite einer Wandung über mindestens eine Nut oder ähnlich verfügen, in welche der erste Ableiter und allenfalls der zweite Ableiter eingelegt werden kann.

Sofern zwei Ableiter eingesetzt werden, so können diese entweder auf der Innenseite derselben Wandung oder auf den Innenseiten von unterschiedlichen Wandungen des Gehäuses angeordnet werden.

Vorzugsweise liegt das Gehäuse in der Form eines offenen Bechers vor und der Elektrodenstapel wird derart in den Hohlraum angeordnet, dass die erste Richtung, in der die Elektrodenfahnen der ersten Elektroden umgebogen sind, in Richtung einer Öffnung des Gehäuses zeigt, wobei ein Bereich der aufeinandergelegten Elektrodenfahnen, der über die in Richtung der Öffnung letzte Elektrode des Elektrodenstapels hinausragen, anschliessend auf diese letzte Elektrode umgebogen werden.

Vorzugsweise werden vor dem Anordnen des Elektrodenstapel in den Hohlraum des Gehäuses die aufeinanderliegenden und umgebogenen Elektrodenfahnen der ersten Elektroden mittels Laser auf eine definierte Länge geschnitten, wobei durch den Laser diese gleichzeitig stoffschlüssig miteinander verbunden werden.

Vorzugsweise wird im selben Schritt auch der erste Ableiter mit dem Laser auf die definierte Länge geschnitten und mit den Elektrodenfahnen der ersten Elektrode stoffschlüssig verbunden.

Sofern auch die zweiten Elektroden über Elektrodenfahnen verfügen, werden diese vorzugsweise analog zu den Elektrodenfahnen der ersten Elektroden mittels Laser auf eine zweite definierte Länge geschnitten. Die zweite definierte Länge entspricht vorzugsweise der definierten Länge, kann jedoch in gewissen Ausführungsformen auch von dieser unterschiedlich sein.

Die ersten Elektroden werden vorzugsweise aus einem ersten Folienmaterial gestanzt oder geschnitten, insbesondere mittels Laserschneiden. Vorzugsweise ist mindestens eine Seite des ersten Folienmaterials mit einem ersten Aktivmaterial beschichtet, wobei die Elektrodenfahnen über keine Beschichtung mit dem ersten Aktivmaterial verfügen oder das erste Aktivmaterial von den Elektrodenfahnen entfernt wird.

Das erste Folienmaterial kann vor dem Stanzen oder Schneiden mit dem ersten Aktivmaterial beschichtet werden oder alternativ auch nach dem Stanzen oder Schneiden. Vorzugsweise sind beide Seiten des Folienmaterials mit dem ersten aktiven Material beschichtet.

Sofern die Elektrodenfahnen zunächst mit dem ersten Aktivmaterial beschichtet sind, wird das erste Aktivmaterial vorzugsweise nach dem Stanzen oder Schneiden entfernt. Falls das erste Folienmaterial auf beiden Seiten mit dem ersten Aktivmaterial beschichtet wird, so wird das erste Aktivmaterial vorzugsweise auf beiden Seiten der Elektrodenfahnen entfernt.

Vorzugsweise werden im selben Schritt auch die zweiten Elektroden aus einem zweiten Folienmaterial gestanzt oder geschnitten, insbesondere mittels Laserschneiden. Vorzugsweise ist mindestens eine Seite des zweiten Folienmaterials mit einem zweiten Aktivmaterial beschichtet, wobei die Elektrodenfahnen der zweiten Elektroden über keine Beschichtung mit dem zweiten Aktivmaterial verfügen oder das zweite Aktivmaterial von den Elektrodenfahnen entfernt wird. Das zweite Folienmaterial kann dasselbe Material wie das erste Folienmaterial sein oder alternativ auch ein anderes Material. Das zweite Aktivmaterial ist vom ersten Aktivmaterial unterschiedlich.

Vorzugsweise wird vor dem Anordnen des Elektrodenstapel in den Hohlraum des Gehäuses die mindestens eine erste Durchführung durch Warmeinpressen Ultraschalleinbetten eines metallischen Elements in die Wandung des Gehäuses hergestellt.

Beim Warmeinpressen wird das metallische Element der ersten Durchführung erhitzt, bevor dieses in die Wandung des Gehäuses gepresst wird. Beim Ultraschalleinbetten werden Schwingungen einer Sonotrode, die auf dem metallischen Element aufliegt, auf dieses übertragen, wodurch zwischen dem metallischen Element sowie dem Gehäuse Hitze entsteht, die das Polymermaterial des Gehäuses im Bereich um das metallische Element schmelzen lässt.

Durch das Warmeinpressen bzw. Ultraschalleinbetten wird eine besonders gute Verbindung zwischen dem metallischen Element der ersten Durchführung und der Wandung des Gehäuses erzielt. Ferner muss durch das Warmeinpressen bzw. Ultraschalleinbetten vorgängig keine Öffnung in der Wandung des Gehäuses hergestellt werden, sondern das metallische Element kann einfach in die Wandung gepresst werden, wobei dieses wegen seiner Erhitzung bzw. dem Schmelzen des Polymermaterials durch die Wandung eingeschmolzen wird.

Sofern auch die zweiten Elektroden in derselben Weise wie die ersten Elektroden mittels umgebogener Elektrodenfahnen mit einer zweiten Durchführung verbunden sind, wird im selben Schritt vorzugsweise auch die zweite Durchführung durch Warmeinpressen eines metallischen Elements in einer Wandung des Gehäuses hergestellt. Vorzugsweise werden in diesem Fall beide Durchführungen in dieselbe Wandung des Gehäuses warmeingepresst. Alternativ können die beiden Durchführungen jedoch auch in unterschiedliche Wandungen des Gehäuses warmeingepresst werden, insbesondere in einander gegenüberliegenden Wandungen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische erste Ausführungsform eines Elektrodenstapels für eine beispielhafte Ausführungsform einer erfindungsgemässen Batterie;
- Fig. 2: einen vergrösserten Ausschnitt des Elektrodenstapels gemäss Fig. 1 im Bereich der Elektrodenfahnen der ersten Elektroden;
- Fig. 3: schematisch eine erste Elektrode, welche aus einem ersten Folienmaterial geschnitten oder gestanzt wurde;
- Fig. 4: schematisch eine zweite Elektrode, welche aus einem zweiten Folienmaterial geschnitten oder gestanzt wurde;
- Fig. 5: schematische Explosionszeichnung der Bildung einer beispielhaften Ausführungsform eines Elektrodenstapels für eine Batterie gemäss der vorliegenden Erfindung nach dem erfindungsgemässen Verfahren;
- Fig. 6: eine beispielhafte Ausführungsform eines nach dem erfindungsgemässen Verfahren gebildeten Elektrodenstapels vor dem Biegen der Elektrodenfahnen;
- Fig. 7: ein Schnittbild durch eine beispielhafte Ausführungsform eines Gehäuses einer erfindungsgemässen Batterie;
- Fig. 8: eine schematische Darstellung des Gehäuses aus der Fig. 7 mit darin angeordneten Ableitern;
- Fig. 9: eine Detailaufnahme einer beispielhaften Verbindung zwischen einer Durchführung und einem Ableiter in einer Schnittdarstellung;
- Fig. 10: einen Elektrodenstapel gemäss der Fig. 1, der in den Hohlraum eines Gehäuses gemäss Fig. 8 eingelegt ist;
- Fig. 11: auf die oberste Elektrode des Elektrodenstapels zurückgebogene Elektrodenfahnen;
- Fig. 12: eine Ausführungsform einer Batterie gemäss der vorliegenden Erfindung, welche mit einem erfindungsgemässen Verfahren hergestellt wurde.

Grundsätzlich sind in den Figuren gleiche Teile mit gleichen Bezugszeichen versehen.

### Wege zur Ausführung der Erfindung

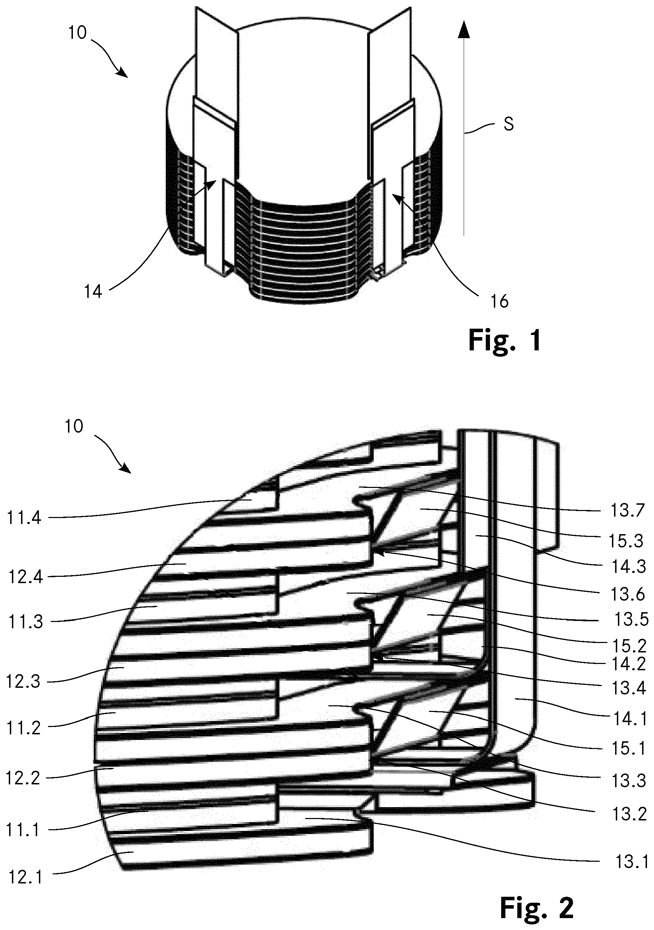

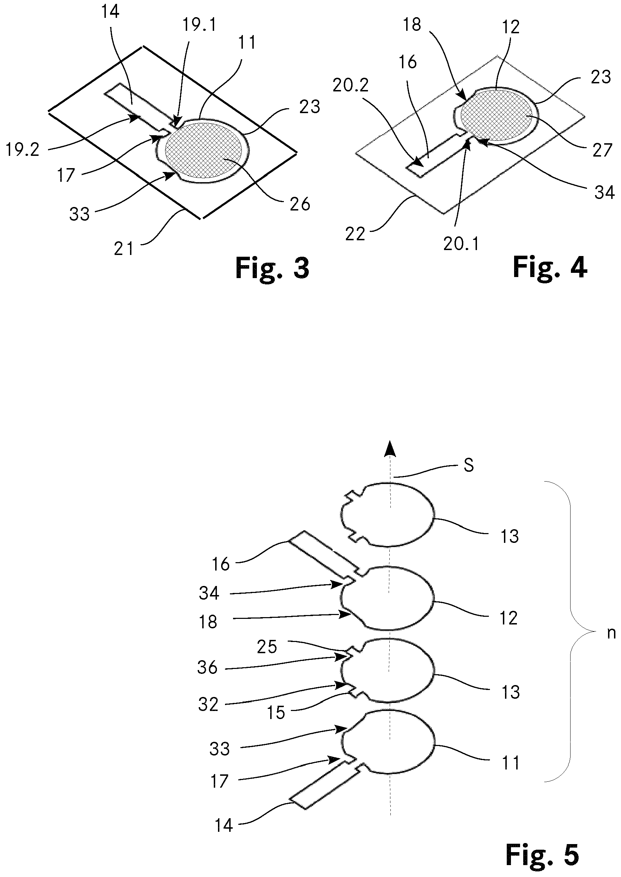

Die Fig. 1 zeigt schematisch eine erste Ausführungsform eines Elektrodenstapels 10 für eine beispielhafte Ausführungsform einer erfindungsgemässen Batterie in einer perspektivischen Ansicht. Der Elektrodenstapel 10 umfasst eine Mehrzahl an ersten Elektroden, eine Mehrzahl an zweiten Elektroden sowie eine Mehrzahl an Separatoren, welche abwechselnd in einer Stapelrichtung S aufeinandergelegt sind, wobei mindestens ein Separator zwischen mindestens einer ersten Elektrode und mindestens einer zweiten Elektrode angeordnet ist (siehe auch Figs. 2 und 5). Bei der gezeigten Ausführungsform weist jeweils jede erste Elektrode sowie jede zweite Elektrode eine Elektrodenfahne 14, 16 auf, wobei die Elektrodenfahnen 14, 16 von den jeweiligen Elektroden abstehen. Die Elektrodenfahnen 14, 16 weisen alle eine im Wesentlichen rechteckige Form auf. Die ersten Elektroden sind derart im Elektrodenstapel 10 angeordnet, dass alle Elektrodenfahnen 14 der ersten Elektroden in Stapelrichtung S gesehen übereinander liegen. Ferner sind alle Elektrodenfahnen 14 der ersten Elektroden in Stapelrichtung S in einem ersten Winkel umgebogen, der in der gezeigten Ausführungsform im Wesentlichen ein rechter Winkel ist, so dass alle Elektrodenfahnen 14 der ersten Elektroden aufeinanderliegen und an einer ersten Seite des Elektrodenstapels anliegen. Ferner sind die zweiten Elektroden derart im Elektrodenstapel 10 angeordnet, dass die Elektrodenfahnen 16 der zweiten Elektroden in Stapelrichtung S gesehen übereinander liegen. Die Elektrodenfahnen 16 der zweiten Elektroden sind analog zu den Elektrodenfahnen der ersten Elektroden in Stapelrichtung S gesehen alle in einem zweiten Winkel, der bei der gezeigten Ausführungsform ebenfalls im Wesentlichen ein rechter Winkel ist, umgebogen. Daher liegen auch die Elektrodenfahnen 16 der zweiten Elektroden aufeinander und liegen auf einer zweiten Seite des Elektrodenstapels 10 auf. Die Elektrodenfahnen 14 der ersten Elektroden sowie die Elektrodenfahnen 16 der zweiten Elektroden sind um ca. 90° relativ zueinander versetzt an der Aussenkante der Elektroden angeordnet.

Die Fig. 2 zeigt einen vergrösserten Ausschnitt des Elektrodenstapels 10 gemäss Fig. 1 im Bereich der Elektrodenfahnen 14 der ersten Elektroden 11.1 - 11.4. In dieser Figur ist gut erkennbar, dass die ersten Elektroden 11.1 - 11.4, die Separatoren 13.1 - 13.7 sowie die zweiten Elektroden 12.1 - 12.4 abwechselnd in Stapelrichtung S aufeinandergelegt sind, um den Elektrodenstapel 10 zu bilden. Die ersten Elektroden 11.1 - 11.4 weisen bei der gezeigten Ausführungsform im Bereich ihrer Elektrodenfahnen 14.1 - 14.3 jeweils eine erste Einkerbung auf, welche relativ zum Rest der Aussenkante der ersten Elektroden 14.1 - 14.4 zurückversetzt sind (siehe auch Fig. 3). Die ersten Elektroden 11.1 - 11.4 sind derart im Elektrodenstapel 10 angeordnet, dass die ersten Einkerbungen aller ersten Elektroden 11.1 - 11.4 übereinander liegen, d.h.. zueinander kongruent sind. Die zweiten Elektroden 12.1 - 12.4 weisen alle ebenfalls eine zweite Einkerbung auf, welche im Wesentlichen gleich ist wie die ersten Einkerbungen der ersten Elektroden (siehe Fig. 4) und sind derart im Elektrodenstapel 10 angeordnet, dass die zweiten Einkerbungen aller zweiten Elektroden 12.1 - 12.4 kongruent zu den ersten Einkerbungen der ersten Elektroden 11.1 - 11.4 sind, d.h. dass die zweiten Einkerbungen jeweils ober- oder unterhalb einer ersten Einkerbung einer benachbarten ersten Elektrode 11.1 - 11.4 liegen.

Die Elektrodenfahnen 14.1 - 14.3 sind in Stapelrichtung in eine erste Richtung in einem ersten Winkel umgebogen, so dass diese aufeinander liegen und auf einer Seite des Elektrodenstapels 10 anliegen. Dadurch bilden die Elektrodenfahnen 14.1 - 14.3 der ersten Elektroden 11.1 - 11.4 einen Elektrodenfahnenstapel.

Auch die Separatoren weisen alle jeweils eine dritte Einkerbung auf und sind derart im Elektrodenstapel 10 angeordnet, dass deren dritte Einkerbungen jeweils kongruent zu den ersten Einkerbungen der ersten Elektroden 11.1 - 11.4 sowie der zweiten Einkerbungen der zweiten Elektroden 12.1 - 12.4 sind. Dadurch bilden die ersten Einkerbungen der ersten Elektroden 11.1 - 11.4, die zweiten Einkerbungen der zweiten Elektroden 12.1 - 12.4 sowie die dritten Einkerbungen der Separatoren 13.1 - 13.7 einen ersten Kanal aus, in welchem die umgebogenen Elektrodenfahnen 14.1 - 14.3 der ersten Elektroden 11.1 - 11.4 aufgenommen sind.

Jeder der Separatoren 13.1 - 13.7 weist eine erste Lasche 15.1 - 15.3 auf, welche von der Aussenkante des jeweiligen Separators 13.1 - 13.7 absteht. Die Separatoren 13.1 - 13.7 sind derart im Elektrodenstapel 10 angeordnet, dass deren erste Laschen 15.1 - 15.3 in Stapelrichtung S ober- bzw. unterhalb der Elektrodenfahnen 14.1 - 14.3 der ersten Elektroden 11.1 - 11.4 angeordnet sind. Die ersten Laschen 15.1 - 15.3 sind ebenfalls in der ersten Richtung umgebogen, so dass zwischen den umgebogenen Elektrodenfahnen 14.1 - 14.3 der ersten Elektroden 11.1 - 11.4 und jeder der zweiten Elektroden 12.1 - 12.4 jeweils mindestens eine erste Lasche 15.1 - 15.3 liegt. Dadurch sind die Elektrodenfahnen 14.1 - 14.3 der ersten Elektroden 11.1 - 11.4 zuverlässig von den zweiten Elektroden 12.1 -12.4 elektrisch isoliert.

Die Fig. 3 zeigt schematisch eine erste Elektrode 11, welche aus einem ersten Folienmaterial 21 geschnitten oder gestanzt wurde. Auf mindestens einer Seite ist die erste Elektrode 11 mit einem ersten Aktivmaterial 26 beschichtet. Die Elektrodenfahne 14 weist keine Beschichtung mit dem ersten Aktivmaterial 26 auf. Wie auf der Figur zu erkennen ist, weist die erste Elektrode 11 nebst der ersten Einkerbung 17 eine vierte Einkerbung 33 auf, welche bei der gezeigten Ausführungsform ca. 90° relativ zur ersten Einkerbung 17 versetzt ist. Mittels der vierten Einkerbung 33 lässt sich im Elektrodenstapel 10 ein zweiter Kanal bilden, in welchem die Elektrodenfahnen 16 der zweiten Elektroden 12 aufgenommen werden können. Die Elektrodenfahne 14 der ersten Elektrode 11 steht im Bereich der ersten Einkerbung 17 von dieser ab. In einem ersten Bereich 19.1, der sich von einer Kante der ersten Einkerbung 17 über eine vordefinierte Distanz entlang der Länge der Elektrodenfahne 14 erstreckt, weist die Elektrodenfahne 14 der ersten Elektrode 11 eine geringere Breite auf, als in einem zweiten Bereich 19.2, der sich über den Rest der Elektrodenfahne 14 der ersten Elektrode 11 erstreckt.

Die Fig. 4 zeigt schematisch eine zweite Elektrode 12, welche aus einem zweiten Folienmaterial 22 geschnitten oder gestanzt wurde. Das zweite Folienmaterial 22 kann hierbei identisch zum ersten Folienmaterial 21 sein, oder aus einem anderen Material bestehen. Die zweite Elektrode 12 weist im Wesentlichen dieselbe Form auf wie die erste Elektrode 11. Die zweite Elektrode 12 kann dieselben Dimensionen aufweisen wie die erste Elektrode 11, kann jedoch auch grössere oder kleinere Dimensionen aufweisen. Die zweite Elektrode 12 ist mindestens auf einer Seite mit einem zweiten Aktivmaterial 27 beschichtet. Das zweite Aktivmaterial 27 ist hierbei vom ersten Aktivmaterial 26 unterschiedlich. Wie bei der ersten Elektrode 11 weist die Elektrodenfahne 16 der zweiten Elektrode 12 keine Beschichtung mit dem zweiten Aktivmaterial 27 auf. Die zweite Elektrode 12 weist eine zweite Einkerbung 18 sowie eine fünfte Einkerbung 34 auf, von welcher die Elektrodenfahne 16 der zweiten Elektrode 12 absteht. Bei der gezeigten Ausführungsform ist die fünfte Einkerbung 34 ca. 90° relativ zur zweiten Einkerbung 18 versetzt. Mittels der fünften Einkerbung 34 lässt sich im Elektrodenstapel 10 der zweite Kanal bilden, in welchem die umgebogenen Elektrodenfahnen 16 der zweiten Elektroden 12 aufgenommen sind.

In einem dritten Bereich 20.1, der sich von einer Kante der fünften Einkerbung 34 über eine definierte Distanz entlang der Länge der Elektrodenfahne 16 der zweiten Elektrode 12 erstreckt, weist die Elektrodenfahne 16 der zweiten Elektrode 12 eine geringere Breite auf, als in einem vierten Bereich 20.2, der sich über den Rest der Elektrodenfahne 16 der zweiten Elektrode 12 erstreckt.

Die Fig. 5 zeigt eine schematische Explosionszeichnung der Bildung einer beispielhaften Ausführungsform eines Elektrodenstapels 10 für eine Batterie gemäss der vorliegenden Erfindung nach dem erfindungsgemässen Verfahren. Beim Zusammenbau des Elektrodenstapels 10 werden abwechselnd mindestens eine erste Elektrode 11, mindestens ein Separator 13 sowie mindestens eine zweite Elektrode 12 in der Stapelrichtung S aufeinandergelegt, so dass jeweils zwischen einer ersten Elektrode 11 und einer zweiten Elektrode 12 ein Separator 13 angeordnet ist. Diese Abfolge n der Bestandteile des Elektrodenstapels 10 kann beliebig oft wiederholt werden, bis der Elektrodenstapel 10 über die gewünschte Anzahl an ersten Elektroden 11 bzw. zweiten Elektroden 12 verfügt. Hierbei wird auf der in Stapelrichtung S oben liegenden zweiten Elektrode 12 wiederum ein Separator aufgelegt, bevor mit dem zuvor beschriebenen Aufeinanderlegen der Elemente des Elektrodenstapels 10 fortgefahren wird.

Wie der Fig. 5 entnommen werden kann, weisen die Separatoren 13 jeweils eine dritte Einkerbung 32 sowie eine sechste Einkerbung 36 auf, welche im Wesentlichen in einem Winkel von 90° zueinander stehen. Von der dritten Einkerbung 32 sowie der sechsten Einkerbung 36 steht jeweils eine erste Lasche 15 bzw. eine zweite Lasche 25 vom Separator 13 ab.

Die mindestens eine erste Elektrode 11, der mindestens eine Separator 13 sowie die mindestens eine zweite Elektrode 12 werden derart angeordnet, dass jeweils die erste Einkerbung 17, die dritte Einkerbung 32 sowie die zweite Einkerbung 18 unter- bzw. übereinander angeordnet sind, d.h. dass diese Einkerbungen 17, 32, 18 in Stapelrichtung gesehen eine Linie bilden. Dadurch liegt eine erste Lasche 15 des Separators ober- oder unterhalb der Elektrodenfahne 14 der ersten Elektrode 11. Ferner werden die mindestens eine erste Elektrode 11, der mindestens eine Separator 13 sowie die mindestens eine zweite Elektrode 12 derart angeordnet, dass die vierte Einkerbung 33, die sechste Einkerbung 36 sowie die fünfte Einkerbung 34 über- bzw. untereinander liegen, d.h. dass diese eine Linie bilden. Dadurch liegt eine zweite Lasche 25 des Separators unter- bzw. oberhalb der Elektrodenfahne 16 der zweiten Elektrode 12.

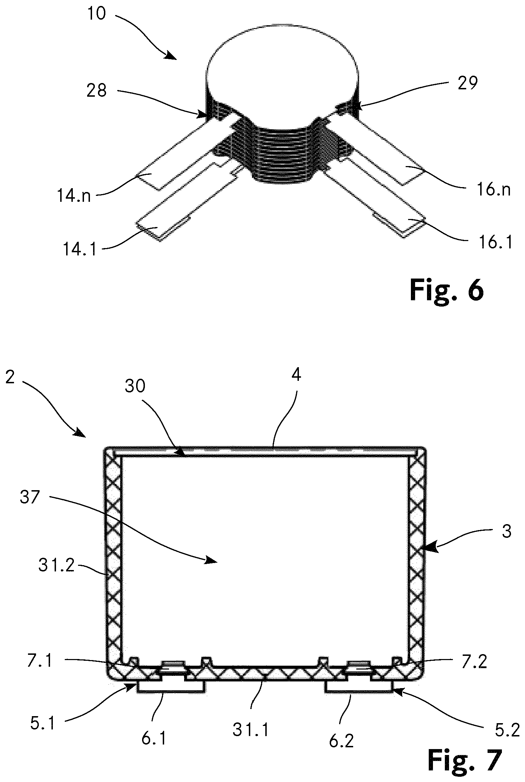

Die Fig. 6 zeigt eine beispielhafte Ausführungsform eines nach dem erfindungsgemässen Verfahren gebildeten Elektrodenstapels 10 vor dem Biegen der Elektrodenfahnen 14, 16. Es ist zu beachten, dass in der Fig. 6 nur jeweils die unterste Elektrodenfahne 14.1 sowie die oberste Elektrodenfahne 14.n der ersten Elektroden 11 und die unterste Elektrodenfahne 16.1 sowie die oberste Elektrodenfahne 16.n der zweiten Elektroden 12 dargestellt sind. Für den Fachmann ist jedoch klar, dass zwischen diesen jeweils noch eine beliebige Anzahl an Elektrodenfahnen 14, 16 der ersten Elektroden 11 bzw. zweiten Elektroden 12 angeordnet sind (nämlich eine Anzahl, die n-2 entspricht). Wie der Figur zu entnehmen ist, bilden sich durch die Einkerbungen ein erster Kanal 28 bzw. ein zweiter I<anal 29, in welche die Elektrodenfahnen 14 der ersten Elektroden 11 bzw. die Elektrodenfahnen 16 der zweiten Elektroden 12 aufgenommen werden, nach dem diese in die erste bzw. zweite Richtung umgebogen werden (vergleiche auch Fig. 1).

Die Fig. 7 zeigt ein Schnittbild durch eine beispielhafte Ausführungsform eines Gehäuses 2 einer erfindungsgemässen Batterie. Das Gehäuse 2 umfasst einen Gehäusebecher 3, welcher über eine erste kreisrunde Wandung 31.1, welche einen Boden des Gehäuses 2 bildet, sowie einer die erste Wandung umlaufenden zweiten Wandung 31.2. Die beiden Wandungen 31.1, 31.2 definieren einen Hohlraum 37, in welchen ein Elektrodenstapel 10 eingelegt wird. Gegenüber der ersten Wandung 31.1 weist der Gehäusebecher 3 eine Öffnung 30 auf, welche mittels eines Gehäusedeckels 4 verschlossen ist. Bei der Herstellung der Batterie liegen Gehäusebecher 3 und Gehäusedeckel 4 separiert vor und werden erst am Schluss des Verfahrens miteinander verbunden, d.h. dass der Gehäusedeckel 4 auf die Öffnung 30 aufgesetzt und mit dem Gehäusebecher 3 verbunden wird, insbesondere durch Schweissen. Das Gehäuse 2 besteht bei der gezeigten Ausführungsform aus einem nicht-leitfähigen Polymermaterial.

In der ersten Wandung 31.1 sind bei der gezeigten Ausführungsform des Gehäuses 2 eine erste Durchführung 5.1 sowie eine zweite Durchführung 5.2 eingesetzt. Diese Durchführungen durchdringen die erste Wandung 31.1 und bilden jeweils eine elektrisch leitende Verbindung zwischen dem Hohlraum 37 und einer Aussenseite der ersten Wandung 31.1 bzw. des Gehäuses 2. Auf einer Aussenseite der ersten Wandung 31.1 weisen beide Durchführungen 5.1, 5.2 ein im Wesentlichen flaches I<ontaktelement 6.1, 6.2 auf. Diese I<ontaktelemente 6.1, 6.2 bilden die Pole der Batterie. Weiter umfassen die Durchführungen 5.1, 5.2 jeweils ein metallisches Element 7.1, 7.2 auf, welches mit dem jeweiligen I<ontaktelement 6.1, 6.2 verbunden sind und welche durch die erste Wandung 31.1 ragen. Die metallischen Elemente 7.1, 7.2 werden insbesondere durch Warmeinpressen in die erste Wandung 31.1 durchgeführt und mit dieser verbunden.

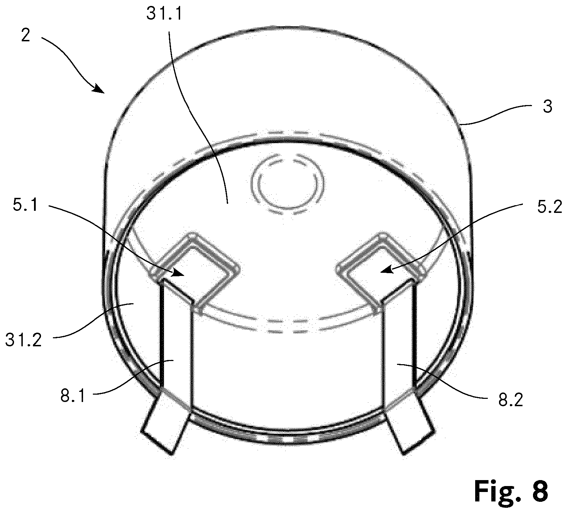

Die Fig. 8 zeigt eine schematische Darstellung des Gehäuses 2 aus der Fig. 7 mit darin angeordneten Ableitern 8.1, 8.2. In der Figur sind die Wandungen 31.1, 31.2 des Gehäuses nur schematisch angedeutet und transparent dargestellt. Ein erster Ableiter 8.1 ist mit der ersten Durchführung 5.1 verbunden, wobei der erste Ableiter 8.1 derart entlang einer Innenseite der zweiten Wandung 31.2 des Gehäuses angeordnet ist, dass sich dieser im Wesentlichen in Stapelrichtung eines nachfolgend in den Hohlraum 37 des Gehäusebechers 3 eingesetzten Elektrodenstapels 10 erstreckt. Bei der gezeigten Ausführungsform entspricht dies im Wesentlichen einer Richtung, die parallel zu einer Normalen der ersten Wandung 31.1 liegt. Die Länge des ersten Ableiters 8.1 ist bei der gezeigten Ausführungsform länger als die Höhe der zweiten Wandung 31.2, so dass der erste Ableiter 8.1 aus der Öffnung 30 hinausragt. Die Verbindung des ersten Ableiters 8.1 mit der ersten Durchführung 5.1 erfolgt mittels Schweissen. Bei der gezeigten Ausführungsform wird in analoger Weise ein zweiter Ableiter 8.2 mit der zweiten Durchführung 5.2 verbunden und auf der Innenseite der zweiten Wandung 31.2 angeordnet.

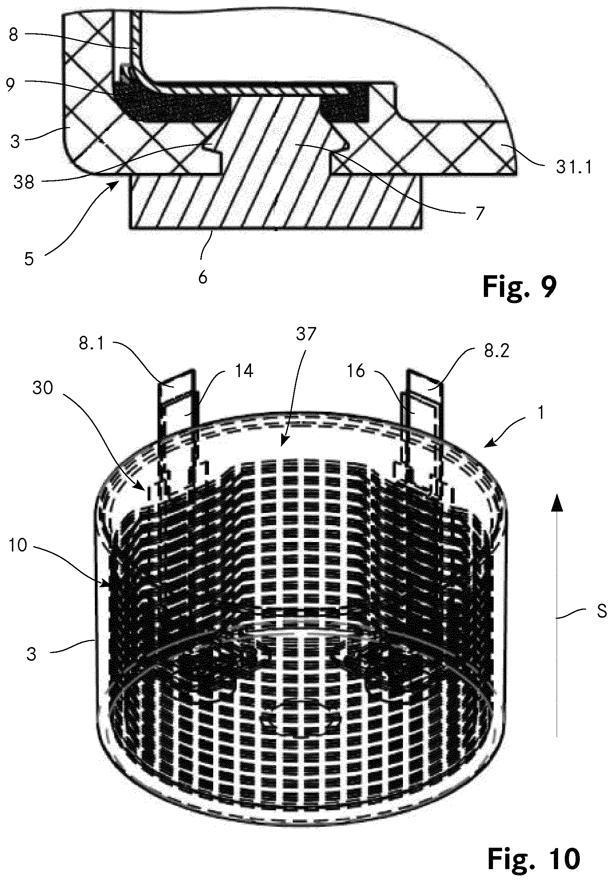

Die Fig. 9 zeigt eine Detailaufnahme einer beispielhaften Verbindung zwischen einer Durchführung 5 und einem Ableiter 8 in einer Schnittdarstellung. Die Durchführung 5 umfasst ein metallisches Element 7 sowie ein I<ontaktelement 6 auf, welche bei der gezeigten Ausführungsform einstückig ausgebildet sind. Das heisst, dass das metallische Element 7 sowie das I<ontaktelement 6 als ein zusammenhängendes Teil ausgeführt sind. Der Ableiter 8 weist im Bereich einer Kante zwischen der Innenseite der zweiten Wandung 31.2 und einer Innenseite der ersten Wandung 31.1 Krümmung auf. Der Ableiter 8 ist stoffschlüssig und elektrisch mit dem metallischen Element 7 der Durchführung 5 verbunden. Im Zwischenraum zwischen dem Ableiter 8 und der Innenseite der ersten Wandung 31.1 ist ein Klebstoff und/oder Dichtstoff 9 eingebracht, um den Ableiter 8 zusätzlich mit der ersten Wandung 31.1 zu befestigen und/oder zu dieser abzudichten. Wie in der Figur gut erkannt werden kann, bilden das I<ontaktelement 6 und das metallische Element 7 im Schnitt die Form des Buchstabens T. Das metallische Element 7 weist eine im Wesentlichen zylindrische Form auf, wobei das metallische Element 7 über eine von diesem abstehende Rippe 38 verfügt, welche das metallische Element 7 umläuft. Durch diese Rippe 38 wird eine bessere und sicherere Verankerung und/oder Abdichtung der Durchführung 5 mit der ersten Wandung 31.1 erreicht.

Die Fig. 10 zeigt beispielhaft einen Elektrodenstapel 10 gemäss der Fig. 1, der in den Hohlraum 37 eines Gehäuses 2 gemäss Fig. 8 eingelegt ist. Der Elektrodenstapel 10 ist derart im Hohlraum 37 angeordnet, dass die umgebogenen und aufeinander liegenden Elektrodenfahnen 14 der ersten Elektroden 11 sich entlang des ersten Ableites 8.1 erstrecken und mit diesen in Kontakt stehen. Der erste Ableiter 8.1 wird vorzugsweise mit den Elektrodenfahnen 14 der ersten Elektroden 11 stoffschlüssig verbunden, insbesondere durch Laserschweissen. Alternativ können die Elektrodenfahnen 14 der ersten Elektroden 11 sowie der erste Ableiter 8.1 mittels eines Lasers gekürzt werden, wobei die gekürzten Kanten der Elektrodenfahnen 14 und des ersten Ableiters 8.1 gleichzeitig miteinander stoffschlüssig verbunden werden. Weiter wird der Elektrodenstapel 10 derart innerhalb des Hohlraumes 37 angeordnet, dass die Elektrodenfahnen 16 der zweiten Elektroden 12 sich entlang des zweiten Ableiters 8.2 erstrecken und mit diesem in Kontakt stehen. Die Elektrodenfahnen 16 der zweiten Elektroden 12 werden analog zu den Elektrodenfahnen 14 der ersten Elektroden 11 stoffschlüssig mit dem zweiten Ableiter 8.2 verbunden und/oder mittels Laserschneiden gekürzt.

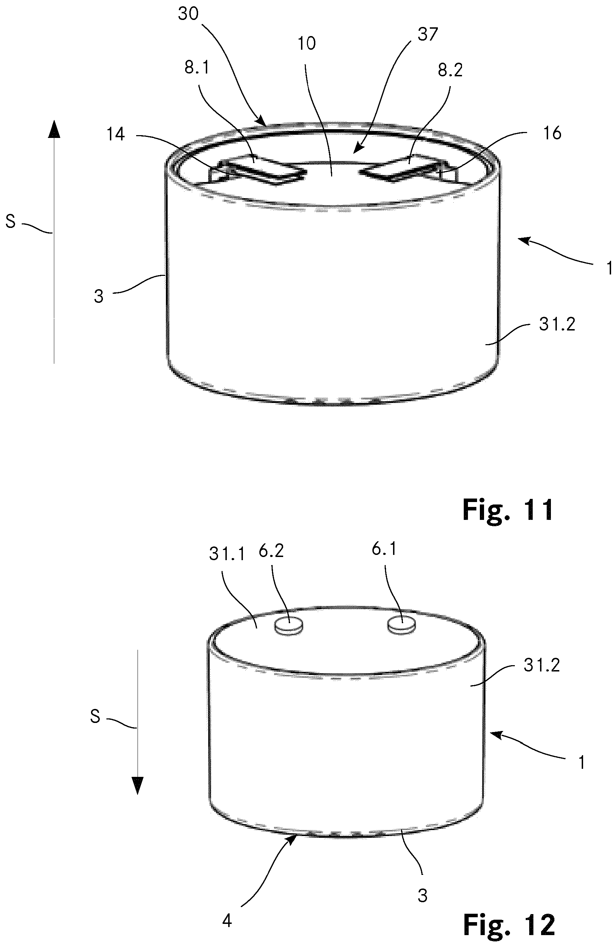

Die Fig. 11 zeigt ferner, wie die über den Elektrodenstapel 10 ragenden und allenfalls durch die Öffnung 30 aus dem Hohlraum 37 herausragenden Elektrodenfahnen 14, 16 sowie Ableiter 8.1, 8.2 auf eine Oberseite des Elektrodenstapels 10 anschliessend an das Einsetzen des Elektrodenstapels 10 in das Gehäuse 2 auf die in Stapelrichtung S letzte Elektrode zurückgebogen werden. Anschliessend kann die Öffnung 30 mit dem Gehäusedeckel 4 verschlossen und der Hohlraum 37 mit einer Elektrolytlösung (nicht gezeigt) gefüllt werden.

Die Fig. 12 zeigt eine Ausführungsform einer Batterie 1 gemäss der vorliegenden Erfindung, welche mit einem erfindungsgemässen Verfahren hergestellt wurde. Auf der Aussenseite der ersten Wandung 31.1 sind die beiden I<ontaktelemente 6.1, 6.2 der beiden Durchführungen 5.1, 5.2 angeordnet, welche als Pole der Batterie 1 dienen. Der Gehäusedeckel 3 des Gehäuses 2 ist auf der der ersten Wandung 31.1 des Gehäuses gegenüberliegenden Seite der Batterie 1 angeordnet.

## Patentansprüche

1. Batterie, insbesondere Sekundärbatterie, umfassend:
a) einen Elektrodenstapel mit einer Mehrzahl von ersten Elektroden, einer Mehrzahl von zweiten Elektroden sowie einer Mehrzahl von Separatoren, welche abwechselnd in einer Stapelrichtung aufeinandergelegt sind, so dass jeweils mindestens ein Separator zwischen mindestens einer der ersten Elektroden und mindestens einer der zweiten Elektroden angeordnet ist;
b) ein Gehäuse aus einem nicht leitenden Polymermaterial mit einem Hohlraum, in welchem der Elektrodenstapel angeordnet ist und welcher mit einer Elektrolytlösung befüllt ist;
c) mindestens eine erste Durchführung, welche an einer Wandung des Gehäuses angeordnet ist und eine erste elektrisch leitfähige Verbindung zwischen dem Hohlraum des Gehäuses sowie einer Aussenseite der Wandung bildet, wobei auf der Aussenseite der Wandung die mindestens eine erste Durchführung ein erstes elektrisch leitfähiges I<ontaktelement aufweist;
d) wobei die Mehrzahl der ersten Elektroden jeweils über eine Elektrodenfahne verfügen, welche von den jeweiligen ersten Elektroden abstehen; und
e) wobei die Mehrzahl an ersten Elektroden derart im Elektrodenstapel angeordnet sind, dass deren Elektrodenfahnen in Stapelrichtung gesehen übereinander liegen;
**dadurch gekennzeichnet, dass**
f) alle Elektrodenfahnen der ersten Elektroden im Bereich einer Aussenkante der jeweiligen ersten Elektroden in Stapelrichtung in eine erste Richtung in einem ersten Winkel umgebogen sind, so dass die Elektrodenfahnen der ersten Elektroden auf einer ersten Seite des Elektrodenstapels an diesem Anliegen und aufeinander aufliegen, wobei alle Separatoren zumindest in einem Bereich, der in Stapelrichtung oberhalb bzw. unterhalb der Elektrodenfahnen der ersten Elektroden liegt, über eine hervorstehende erste Lasche verfügen, welche in die erste Richtung umgebogen ist, so dass jeweils mindestens eine Lasche zwischen einer umgebogenen Elektrodenfahne der ersten Elektroden und mindestens einer der zweiten Elektroden liegt, wobei mindestens eine der Elektrodenfahnen der ersten Elektroden elektrisch mit der ersten Durchführung verbunden ist.

2. Batterie gemäss Anspruch 1, **dadurch gekennzeichnet, dass** Mehrzahl der zweiten Elektroden jeweils über eine Elektrodenfahne verfügen, welche von den jeweiligen zweiten Elektroden abstehen und die Mehrzahl an zweiten Elektroden derart im Elektrodenstapel angeordnet sind, dass deren Elektrodenfahnen in Stapelrichtung gesehen übereinander liegen, wobei alle Elektrodenfahnen der zweiten Elektroden im Bereich einer Aussenkante der jeweiligen zweiten Elektroden in Stapelrichtung in eine zweite Richtung in einem zweiten Winkel umgebogen sind, so dass die Elektrodenfahnen der zweiten Elektroden auf einer zweiten Seite des Elektrodenstapels an diesem Anliegen und aufeinander aufliegen, wobei alle Separatoren zumindest in einem Bereich, der in Stapelrichtung oberhalb bzw. unterhalb der Elektrodenfahnen der zweiten Elektroden liegt, über eine hervorstehende zweite Lasche verfügen, welche in die zweite Richtung umgebogen sind, so dass jeweils eine der zweiten Laschen zwischen einer umgebogenen Elektrodenfahne der zweiten Elektroden und mindestens einer der ersten Elektroden liegt, wobei mindestens eine der Elektrodenfahnen der zweiten Elektroden elektrisch mit einer zweiten Durchführung verbunden ist, welche an einer Wandung des Gehäuses angeordnet ist und eine zweite elektrisch leitfähige Verbindung zwischen dem Hohlraum des Gehäuses sowie einer Aussenseite der Wandung bildet, und wobei auf der Aussenseite der Wandung die mindestens eine zweite Durchführung ein zweites elektrisch leitfähiges I<ontaktelement aufweist.

3. Batterie gemäss einem der Ansprüche 1 oder 2, **dadurch gekennzeichnet, dass** die erste Durchführung und allenfalls die zweite Durchführung jeweils über einen ersten Ableiter bzw. über einen zweiten Ableiter in der Form eines Metallstreifens verfügt, der sich in Stapelrichtung entlang einer Innenwandung des Gehäuses erstreckt, wobei der Elektrodenstapel derart im Hohlraum angeordnet ist, dass mindestens eine der Elektrodenfahnen der ersten Elektroden mit dem ersten Ableiter der ersten Durchführung in Kontakt ist sowie allenfalls mindestens eine der Elektrodenfahnen der zweiten Elektroden mit dem zweiten Ableiter der zweiten Durchführung in Kontakt ist.

4. Batterie gemäss Anspruch 3, **dadurch gekennzeichnet, dass** der erste Ableiter der ersten Durchführung mit der mindestens einen Elektrodenfahne der ersten Elektroden und allenfalls der zweite Ableiter der zweiten Durchführung mit der mindestens einen Elektrodenfahne der zweiten Elektroden stoffschlüssig verbunden ist, insbesondere durch Schweissen.

5. Batterie gemäss einem der Ansprüche 1 bis 4, **dadurch gekennzeichnet, dass** die Elektrodenfahnen der ersten Elektroden in einem ersten Bereich, der an eine Aussenkante einer jeweiligen ersten Elektrode anliegt, eine geringere Breite aufweisen, als in einem zweiten Bereich, der sich vom ersten Bereich bis zu einem freien Ende der Elektrodenfahnen erstreckt.

6. Batterie gemäss einem der Ansprüche 1 bis 5, **dadurch gekennzeichnet, dass** die Aussenkanten aller ersten Elektroden im Bereich der Elektrodenfahnen über eine erste Einkerbung verfügen, aus welcher die Elektrodenfahnen der ersten Elektroden abstehen, wobei die zweiten Elektroden sowie die Separatoren an ihren Aussenkanten jeweils über eine zweite Einkerbung bzw. über eine dritte Einkerbung verfügen und derart im Elektrodenstapel angeordnet sind, dass die zweiten Einkerbungen der zweiten Elektroden sowie die dritten Einkerbungen der Separatoren kongruent zu den ersten Einkerbungen der ersten Elektroden sind.

7. Verfahren zum Herstellen einer Batterie, insbesondere gemäss einem der Ansprüche 1 bis 6, umfassend die Schritte:
a) Bereitstellen einer Mehrzahl von ersten Elektroden, einer Mehrzahl von zweiten Elektroden sowie einer Mehrzahl von Separatoren, wobei jede erste Elektrode über eine von dieser abstehende Elektrodenfahne verfügt sowie jeder Separator über mindestens eine von diesem abstehende erste Lasche verfügt;
b) Bildung eines Elektrodenstapels durch abwechselndes Aufeinanderlegen der Mehrzahl an ersten Elektroden, der Mehrzahl an zweiten Elektroden sowie der Mehrzahl an Separatoren in einer Stapelrichtung, so dass jeweils mindestens ein Separator zwischen mindestens einer der ersten Elektroden und mindestens einer der zweiten Elektroden angeordnet ist und derart, dass die Elektrodenfahnen der ersten Elektroden sowie die ersten Laschen der Separatoren in Stapelrichtung gesehen übereinander liegen;
c) Umbiegen der Elektrodenfahnen der ersten Elektroden in Stapelrichtung in einen ersten Winkel in eine erste Richtung, wobei die ersten Laschen der Separatoren in die erste Richtung mitgebogen werden, so dass die Elektrodenfahnen der ersten Elektroden auf einer ersten Seite des Elektrodenstapels an diesem Anliegen und aufeinander aufliegen, wobei jeweils eine der ersten Laschen zwischen einer umgebogenen Elektrodenfahne der ersten Elektroden und mindestens einer der weiten Elektroden liegt;
d) Anordnen des Elektrodenstapels in einen Hohlraum eines Gehäuses aus einem nicht leitenden Polymermaterial, welches an einer Wandung über mindestens eine erste Durchführung verfügt, die eine erste elektrisch leitfähige Verbindung zwischen dem Hohlraum des Gehäuses sowie einer Aussenseite der Wandung bildet, wobei auf der Aussenseite der Wandung die mindestens eine erste Durchführung ein erstes elektrisch leitfähiges I<ontaktelement aufweist, und in Kontakt bringen der ersten Durchführung mit mindestens einer Elektrodenfahne der ersten Elektroden;
e) Verschliessen des Gehäuses sowie Befüllen des Hohlraumes mit einer Elektrolytlösung.

8. Verfahren gemäss Anspruch 7, **dadurch gekennzeichnet, dass** vor dem Schritt d) ein erster Ableiter in der Form eines metallischen Streifens auf einer Innenwandung des Gehäuses angeordnet wird, wobei sich der metallische Streifen auf der Innenwandung in einer Richtung, die der Stapelrichtung des Elektrodenstapels entspricht, erstreckt und der erste Ableiter mit der ersten Durchführung elektrisch verbunden wird, insbesondere durch Verschweissen, und der Elektrodenstapel anschliessend in Schritt d) derart in den Hohlraum angeordnet wird, dass mindestens eine Elektrodenfahne der ersten Elektroden mit dem ersten Ableiter in Kontakt ist, wobei der Ableiter vorzugsweise anschliessend stoffschlüssig mit der mindestens einen Elektrodenfahne stoffschlüssig verbunden wird, insbesondere durch Schweissen.

9. Verfahren gemäss einem der Ansprüche 7 bis 8, **dadurch gekennzeichnet, dass** das Gehäuse in der Form eines offenen Bechers vorliegt und der Elektrodenstapel derart in den Hohlraum angeordnet wird, dass die erste Richtung, in der die Elektrodenfahnen der ersten Elektroden umgebogen sind, in Richtung einer Öffnung des Gehäuses zeigt, wobei ein Bereich der aufeinandergelegten Elektrodenfahnen, der über die in Richtung der Öffnung letzte Elektrode des Elektrodenstapels hinausragt, auf diese letzte Elektrode umgebogen wird.

10. Verfahren gemäss einem der Ansprüche 7 bis 9, **dadurch gekennzeichnet, dass** vor dem Schritt d) die aufeinanderliegenden und umgebogenen Elektrodenfahnen der ersten Elektroden mittels Laser auf eine definierte Länge geschnitten werden, wobei durch den Laser diese gleichzeitig stoffschlüssig miteinander verbunden werden.

11. Verfahren gemäss einem der Ansprüche 7 bis 10, **dadurch gekennzeichnet, dass** vor dem Schritt a) die ersten Elektroden aus einem ersten Folienmaterial gestanzt oder geschnitten werden, insbesondere mittels Laserschneiden, wobei vorzugsweise mindestens eine Seite des ersten Folienmaterials mit einem ersten Aktivmaterial beschichtet ist, wobei die Elektrodenfahnen über keine Beschichtung mit dem ersten Aktivmaterial verfügen oder das erste Aktivmaterial von den Elektrodenfahnen entfernt wird.

12. Verfahren gemäss einem der Ansprüche 7 bis 11, **dadurch gekennzeichnet, dass** vor dem Schritt d) die mindestens eine erste Durchführung durch Warmeinpressen eines metallischen Elements in die Wandung des Gehäuses hergestellt wird.

## Claims

1. A battery, in particular a secondary battery, comprising:
a) an electrode stack having a plurality of first electrodes, a plurality of second electrodes and a plurality of separators, which are alternately stacked on top of one another in a stacking direction, such that in each case at least one separator is arranged between at least one of the first electrodes and at least one of the second electrodes;
b) a housing made of a non-conductive polymer material, the housing including a cavity in which the electrode stack is arranged and which is filled with an electrolyte solution;
c) at least one first feedthrough, which is arranged on a wall of the housing and forms a first electrically conductive connection between the cavity of the housing and an outer side of the wall, wherein the at least one first feedthrough has a first electrically conductive contact element on the outer side of the wall;
d) wherein the plurality of first electrodes each have an electrode tab, which protrudes from the respective first electrodes; and
e) wherein the plurality of first electrodes are arranged in the electrode stack in such a way that the electrode tabs thereof lie one above the other in the stacking direction;
**characterized in that**
f) all electrode tabs of the first electrodes are bent in a first direction at a first angle in the stacking direction in the region of an outer edge of the first electrodes, so that the electrode tabs of the first electrodes on a first side of the electrode stack bear against the electrode stack and rest on one another, wherein all separators, at least in a region which lies above or below the electrode tabs of the first electrodes in the stacking direction, include a protruding first tab, which is bent in the first direction, so that in each case at least one tab lies between a bent-over electrode tab of the first electrodes and at least one of the second electrodes, and wherein at least one of the electrode tabs of the first electrodes is electrically connected to the first feedthrough.

2. Battery according to Claim 1, **characterized in that** the plurality of second electrodes each include an electrode tab, which protrudes from the respective second electrodes, and the plurality of second electrodes are arranged in the electrode stack in such a way that the electrode tabs thereof lie one above the other in the stacking direction, wherein all electrode tabs of the second electrodes are bent in a second direction at a second angle in the stacking direction in the region of an outer edge of the second electrodes, so that the electrode tabs of the second electrodes on a second side of the electrode stack bear against the electrode stack and rest on one another, wherein all separators, at least in a region which lies above or below the electrode tabs of the second electrodes in the stacking direction, include a protruding second tab, which is bent in the second direction, so that in each case one of the second tabs lies between a bent-over electrode tab of the second electrodes and at least one of the first electrodes, and wherein at least one of the electrode tabs of the second electrodes is electrically connected to a second feedthrough, which is arranged on a wall of the housing and forms a second electrically conductive connection between the cavity of the housing and an outer side of the wall, and wherein the at least one second feedthrough has a second electrically conductive contact element on the outer side of the wall.

3. Battery according to either of Claims 1 or 2, **characterized in that** the first feedthrough and if present the second feedthrough each include a first conductor or a second conductor in the form of a metal strip, which extends in the stacking direction along an inner wall of the housing, wherein the electrode stack is arranged in the cavity in such a way that at least one of the electrode tabs of the first electrodes is in contact with the first conductor of the first feedthrough and if present at least one of the electrode tabs of the second electrodes is in contact with the second conductor of the second feedthrough.

4. Battery according to Claim 3, **characterized in that** the first conductor of the first feedthrough is cohesively connected to the at least one electrode tab of the first electrodes and if present the second conductor of the second feedthrough is cohesively connected to the at least one electrode tab of the second electrodes, in particular by welding.

5. Battery according to one of Claims 1 to 4, **characterized in that** the electrode tabs of the first electrodes have a smaller width in a first region, which bears against an outer edge of a respective first electrode, than in a second region, which extends from the first region to a free end of the electrode tabs.

6. Battery according to one of Claims 1 to 5, **characterized in that** the outer edges of all first electrodes in the region of the electrode tabs have a first notch, from which the electrode tabs of the first electrodes protrude, wherein the second electrodes and the separators each have a second notch and a third notch, respectively, at their outer edges and are arranged in the electrode stack in such a way that the second notches of the second electrodes and the third notches of the separators are congruent with the first notches of the first electrodes.

7. Method for producing a battery, in particular according to one of Claims 1 to 6, comprising the steps of:
a) providing a plurality of first electrodes, a plurality of second electrodes and a plurality of separators, wherein each first electrode has an electrode tab protruding therefrom and each separator has at least one first tab protruding therefrom;
b) forming an electrode stack by alternately stacking the plurality of first electrodes, the plurality of second electrodes and the plurality of separators on top of one another in a stacking direction, such that in each case at least one separator is arranged between at least one of the first electrodes and at least one of the second electrodes and in such a way that the electrode tabs of the first electrodes and the first tabs of the separators lie one above the other in the stacking direction;
c) bending the electrode tabs of the first electrodes in a first direction at a first angle in the stacking direction, wherein the first tabs of the separators are also bent in the first direction, so that the electrode tabs of the first electrodes on a first side of the electrode stack bear against the electrode stack and rest on one another, wherein in each case one of the first tabs lies between a bent-over electrode tab of the first electrodes and at least one of the second electrodes;
d) arranging the electrode stack in a cavity of a housing made of a non-conductive polymer material, the housing having at least one first feedthrough on a wall thereof, the first feedthrough forming a first electrically conductive connection between the cavity of the housing and an outer side of the wall, wherein the at least one first feedthrough has a first electrically conductive contact element on the outer side of the wall, and bringing the first feedthrough into contact with at least one electrode tab of the first electrodes;
e) closing the housing and filling the cavity with an electrolyte solution.

8. Method according to Claim 7, **characterized in that**, before step d), a first conductor in the form of a metal strip is arranged on an inner wall of the housing, wherein the metal strip extends on the inner wall in a direction which corresponds to the stacking direction of the electrode stack, and the first conductor is electrically connected to the first feedthrough, in particular by welding, and the electrode stack is then arranged in the cavity in step d) in such a way that at least one electrode tab of the first electrodes is in contact with the first conductor, wherein the conductor is preferably then cohesively connected to the at least one electrode tab, in particular by welding.

9. Method according to one of Claims 7 to 8, **characterized in that** the housing is in the form of an open cup and the electrode stack is arranged in the cavity in such a way that the first direction, in which the electrode tabs of the first electrodes are bent , points in the direction of an opening of the housing, wherein a region of the electrode tabs which are stacked on top of one another and which protrudes beyond the last electrode of the electrode stack in the direction of the opening is bent over onto this last electrode.

10. Method according to any one of Claims 7 to 9, **characterized in that**, before step d), the electrode tabs of the first electrodes which lie on top of one another and are bent are cut to a defined length by means of a laser, wherein the electrode tabs of the first electrodes are cohesively connected to one another at the same time by means of the laser.

11. Method according to any one of Claims 7 to 10, **characterized in that**, before step a), the first electrodes are punched or cut from a first film material, in particular by means of laser cutting, wherein preferably at least one side of the first film material is coated with a first active material, wherein the electrode tabs have no coating with the first active material or the first active material is removed from the electrode tabs.

12. Method according to any one of Claims 7 to 11, **characterized in that**, before step d), the at least one first feedthrough is produced by hot pressing a metal element into the wall of the housing.

## Revendications

1. Batterie, en particulier batterie secondaire, comprenant :
a) un empilement d'électrodes avec une pluralité de premières électrodes, une pluralité de deuxièmes électrodes ainsi qu'une pluralité de séparateurs, lesquels sont posés l'un sur l'autre en alternance dans une direction d'empilement, de telle manière qu'au moins un séparateur est respectivement disposé entre au moins une des premières électrodes et au moins une des deuxièmes électrodes,
b) un boîtier dans un matériau polymère non conducteur avec un espace creux dans lequel est disposé l'empilement d'électrodes et lequel est rempli d'une solution électrolytique,
c) au moins un premier passage, lequel est disposé sur une paroi du boîtier et forme une première liaison électroconductrice entre l'espace creux du boîtier et un côté extérieur de la paroi, sachant que sur le côté extérieur de la paroi, au moins un premier passage comporte un premier élément de contact électroconducteur,
d) sachant que la pluralité de premières électrodes disposent respectivement d'une languette d'électrode, lesquelles languettes ressortent des premières électrodes respectives, et
e) sachant que la pluralité de premières électrodes est disposée dans l'empilement d'électrodes de telle manière que leurs languettes d'électrode, vues dans la direction d'empilement, sont situées l'une sur l'autre,
**caractérisée en ce que**
f) toutes les languettes d'électrode des premières électrodes dans la zone d'un bord extérieur des premières électrodes respectives sont recourbées dans la direction d'empilement dans une première direction dans un premier angle de telle manière que les languettes d'électrode des premières électrodes sur un premier côté de l'empilement d'électrodes s'appliquent à celui-ci et reposent l'une sur l'autre, sachant que tous les séparateurs disposent, au moins dans une zone qui se situe dans la direction d'empilement au-dessus ou en dessous des languettes d'électrodes des premières électrodes, d'une première patte faisant saillie, laquelle est recourbée dans la première direction de telle manière qu'au moins une patte est située respectivement entre une languette d'électrode recourbée des premières électrodes et au moins une des deuxièmes électrodes, sachant qu'au moins une des languettes d'électrode des premières électrodes est électriquement reliée au premier passage.

2. Batterie selon la revendication 1**, caractérisée en ce que** la pluralité des deuxièmes électrodes dispose respectivement d'une languette d'électrode, lesquelles languettes font saillie des deuxièmes électrodes respectives et la pluralité de deuxièmes électrodes est disposée dans l'empilement d'électrodes de telle manière que leurs languettes d'électrode sont situées l'une sur l'autre, vues en direction de l'empilement, sachant que toutes les languettes d'électrodes des deuxièmes électrodes sont recourbées dans la zone d'un bord extérieur des deuxièmes électrodes respectives dans la direction d'empilement dans une deuxième direction dans un deuxième angle de telle sorte que les languettes d'électrode des deuxièmes électrodes sur un deuxième côté de l'empilement d'électrodes s'appliquent à celui-ci et reposent les unes sur les autres, sachant que tous les séparateurs au moins dans une zone, qui se situe en direction d'empilement au-dessus ou en dessous des languettes d'électrode des deuxièmes électrodes, disposent d'une deuxième patte en saillie, lesquelles sont recourbées dans la deuxième direction de telle manière qu'une des deuxièmes pattes se situe respectivement entre une languette d'électrode recourbée des deuxièmes électrodes et au moins une des premières électrodes, sachant qu' au moins une des languettes d'électrode des deuxièmes électrodes est électriquement reliée à un deuxième passage, lequel est disposé sur une paroi du boîtier et forme une deuxième liaison électroconductrice entre l'espace creux du boîtier et un côté extérieur de la paroi, et sachant que sur le côté extérieur de la paroi au moins un deuxième passage comporte un deuxième élément de contact électroconducteur.

3. Batterie selon l'une quelconque des revendications 1 ou 2, **caractérisée en ce que** le premier passage, et éventuellement le deuxième passage, dispose respectivement d'une première dérivation ou d'une deuxième dérivation sous la forme d'une bande métallique, qui s'étend en direction d'empilement le long d'une paroi intérieure du boîtier, sachant que l'empilement d'électrodes est disposé dans l'espace creux de telle manière qu'au moins une des languettes d'électrode des premières électrodes est en contact avec la première dérivation du premier passage et éventuellement au moins une des languettes d'électrode des deuxièmes électrodes est en contact avec la deuxième dérivation du deuxième passage.

4. Batterie selon la revendication 3, **caractérisée en ce que** la première dérivation du premier passage est reliée par conformité de matière à au moins une languette d'électrode des premières électrodes et éventuellement la deuxième dérivation du deuxième passage à au moins une languette d'électrode des deuxièmes électrodes, en particulier par soudage.

5. Batterie selon l'une quelconque des revendications 1 à 4, **caractérisée en ce que** les languettes d'électrode des premières électrodes comportent dans une première zone, qui s'applique à un bord extérieur d'une première électrode respective, une largeur plus faible que dans une deuxième zone, qui s'étend de la première zone jusqu'à une extrémité libre des languettes d'électrode.

6. Batterie selon l'une quelconque des revendications 1 à 5, **caractérisée en ce que** les bords extérieurs de toutes les premières électrodes disposent dans la zone des languettes d'électrode d'une première encoche de laquelle font saillie les languettes d'électrode des premières électrodes, sachant que les deuxièmes électrodes ainsi que les séparateurs disposent respectivement sur leurs bords extérieurs d'une deuxième encoche ou d'une troisième encoche et sont disposés dans l'empilement d'électrodes de telle manière que les deuxièmes encoches des deuxièmes électrodes ainsi que les troisièmes encoches des séparateurs coïncident avec les premières encoches des premières électrodes.

7. Procédé de fabrication d'une batterie, en particulier selon l'une quelconque des revendications 1 à 6, comprenant les étapes de :
a) fournir une pluralité de premières électrodes, une pluralité de deuxièmes électrodes ainsi qu'une pluralité de séparateurs, sachant que chaque première électrode dispose d'une languette d'électrode faisant saillie de celle-ci, et chaque séparateur dispose au moins d'une première patte faisant saillie de celui-ci,
b) formation d'un empilement d'électrodes par superposition alternée de la pluralité de premières électrodes, de la pluralité de deuxièmes électrodes ainsi que de la pluralité de séparateurs dans une direction d'empilement de telle sorte qu'au moins un séparateur est respectivement disposé entre au moins une des premières électrodes et au moins une des deuxièmes électrodes et de telle sorte que les languettes d'électrode des premières électrodes et les premières pattes des séparateurs, vues dans la direction d'empilement, sont situées les unes sur les autres,
c) recourber les languettes d'électrode des premières électrodes en direction d'empilement dans un premier angle dans une première direction, sachant que les premières pattes des séparateurs sont pliées conjointement dans la première direction de telle sorte que les languettes d'électrodes des premières électrodes s'appliquent à celui-ci sur un premier côté de l'empilement d'électrodes et reposent les unes sur les autres, sachant qu'une des premières pattes se situe respectivement entre une languette d'électrode recourbé des premières électrodes et au moins une des deuxièmes électrodes,
d) mise en place de l'empilement d'électrodes dans un espace creux d'un boîtier dans un matériau polymère non conducteur, lequel dispose sur une paroi d'au moins un premier passage, qui forme une première liaison électroconductrice entre l'espace creux du boîtier et un côté extérieur de la paroi, sachant que sur le côté extérieur de la paroi au moins un premier passage comporte un premier élément de contact électroconducteur, et mise en contact du premier passage avec au moins une languette d'électrode des premières électrodes,
e) fermeture du boîtier et remplissage de l'espace creux avec une solution électrolytique.

8. Procédé selon la revendication 7, **caractérisé en ce qu'**avant l'étape d), une première dérivation sous la forme d'une bande métallique est disposée sur une paroi intérieure du boîtier, sachant que la bande métallique s'étend sur la paroi intérieure dans une direction, qui correspond à la direction d'empilement de l'empilement d'électrodes et la première dérivation est électriquement reliée au premier passage, en particulier par soudage, et l'empilement d'électrodes est ensuite disposé dans l'étape d) dans l'espace creux de telle manière qu'au moins une languette d'électrode des premières électrodes est en contact avec la première dérivation, sachant que la dérivation est reliée de préférence ensuite par conformité de matière à au moins une languette d'électrode par conformité de matière, en particulier par soudage.

9. Procédé selon l'une quelconque des revendications 7 à 8, **caractérisé en ce que** le boîtier existe sous la forme d'un godet ouvert et l'empilement d'électrodes est disposé dans l'espace creux de telle manière que la première direction, dans laquelle les languettes d'électrode des premières électrodes sont recourbées, est dans une direction d'une ouverture du boîtier, sachant qu'une zone des languettes d'électrode disposées l'une sur l'autre, qui dépasse sur la dernière électrode de l'empilement d'électrodes en direction de l'ouverture, est recourbée sur cette dernière électrode.

10. Procédé selon l'une quelconque des revendications 7 à 9, **caractérisé en ce qu'**avant l'étape d), les languettes d'électrode superposées l'une sur l'autre et recourbées des premières électrodes sont découpées au moyen de laser à une longueur définie, sachant que celles-ci sont reliées simultanément entre elles par conformité de matière au moyen du laser.

11. Procédé selon l'une quelconque des revendications 7 à 10, **caractérisé en ce qu'**avant l'étape a), les premières électrodes sont estampées ou découpées à partir d'un matériau en feuille, en particulier au moyen du découpage au laser, sachant de préférence qu'au moins un côté du premier matériau en feuille est revêtu d'un premier matériau actif, sachant que les languettes d'électrode ne disposent d'aucun revêtement avec le premier matériau actif ou le premier matériau actif est enlevé des languettes d'électrode.

12. Procédé selon l'une quelconque des revendications 7 à 11, **caractérisé en ce qu'**avant l'étape d), au moins un premier passage est réalisé par pressage à chaud d'un élément métallique dans la paroi du boîtier.
